# EUROPEAN PATENT SPECIFICATION

(11) **EP 3 107 216 B1**
(45) Date of publication and mention of the grant of the patent: **25.09.2019**
(21) Application number: 15749568.0
(22) Date of filing: 14.01.2015
(51) Int. Cl.: H04B 1/40, H04L 12/58, H04W 4/12, G06F 3/0488, H04M 1/725, G06F 3/0484, H04L 29/08, G11B 27/031, G11B 27/34, H04N 5/77, H04N 5/907, H04N 21/00, H04W 4/18, H04N 7/14, H04L 29/06, H04N 21/414, H04N 21/4223, H04N 21/4402, H04N 21/472, H04N 21/4786, H04N 21/845, H04W 88/18

(54) **MOBILE TERMINAL AND METHOD FOR CONTROLLING SAME**
MOBILES ENDGERÄT UND VERFAHREN ZUR STEUERUNG DAVON
TERMINAL MOBILE ET PROCÉDÉ DE COMMANDE ASSOCIÉ

(30) Priority: 12.02.2014 KR 20140016097
(43) Date of publication of application: 21.12.2016
(73) Proprietor: LG Electronics Inc., Yeongdeungpo-gu Seoul 07336 (KR)
(72) Inventor: JANG, Yujune, Seoul 137-893 (KR); JUNG, Eunsoo, Seoul 137-893 (KR); CHEON, Sunhee, Seoul 137-893 (KR)
(74) Representative: Ter Meer Steinmeister & Partner
(86) International application number: PCT/KR2015/000396
(87) International publication number: WO 2015/122624

(56) References cited:
- EP-A2- 1 885 120
- WO-A1-2010/119181
- KR-A- 20060 041 557
- KR-A- 20060 049 755
- KR-A- 20130 082 370
- US-A1- 2002 112 005
- US-A1- 2005 054 287
- US-A1- 2010 235 746
- US-A1- 2011 189 982
- US-A1- 2013 260 802
- US-A1- 2013 287 370
- US-B1- 7 096 038

## Description

### TECHNICAL FIELD

The present invention relates to a mobile terminal capable of controlling a size of a video in accordance with a size of a file attachable to a message and a method of controlling therefor.

### BACKGROUND ART

A mobile terminal is a device which may be configured to perform various functions. Examples of such functions include data and voice communications, capturing images and video via a camera, recording audio, playing music files and outputting music via a speaker system, and displaying images and video on a display.

A function of a mobile terminal is diversifying. For instance, the mobile terminal has functions of performing data and audio communication, capturing a picture and video via a camera, recording audio, playing a music file via a speaker system, and outputting an image or a video on a display unit. Some terminals additionally have a function of playing an electronic game or perform a function of a multimedia player. In particular, a recent mobile terminal can receive a multicast signal providing visual contents such as broadcast, a video and a television program.

As a function of a terminal is diversified, the terminal is implemented in a form of a multimedia player equipped with multiple functions of capturing a picture or a video, playing a music file or a video file, playing a game, receiving broadcast and the like for example.

In order to support and increase the functions of the terminal, it may be able to consider enhancing a structural part and/or a software part of the terminal.

Various message delivery means can be used for a terminal. Not only a conventionally used text message, but an instant message, e-mail, SNS and the like, which have been mainly used in such a fixed terminal as a PC and the like, are serviced in the mobile terminal.

Yet, there exists a restriction on a size of a file attachable to each message. Hence, an attachment of big volume cannot be attached to a message.

US 2005/0054287 A1 discloses an apparatus and method for dividing an MMS message in a mobile terminal. The apparatus is capable of dividing an MMS message exceeding transmission capacity of a server to a size that can be transferred. By implementing a multi-thread of a shooting thread and a dividing thread, an image signal and a voice signal inputted when shooting video are encoded, divided, stored and then transmitted so that a multimedia data as large as available for a mobile terminal can be transmitted as an MMS regardless of transmission capacity of an MMS server.

US 2013/260802 A1 discloses a MMS subsystem that includes a user interface configured to allow a user to formulate an MMS message for delivery to a designated phone number; an oversized MMS message detection subsystem configured to detect when the formulated MMS message exceeds an allowable size limit; and an oversized MMS message management subsystem configured to divide an oversized MMS message into smaller MMS messages that are each within the allowable size limit and to cause each smaller MMS message to be delivered to the designated phone number/address. The MMS subsystem is part of a wireless mobile communication device. Portions of the MMS subsystem are in addition or instead be part of a multimedia messaging service center (MMSC) server.

US 7 096 038 B1 discloses an apparatus for wirelessly communicating a digital photograph image file. The image file is divided into resulting files and the resulting files attached to e-mail messages that are wirelessly transmitted to a wireless network. Upon receipt of the wireless e-mail messages and resulting file attachments, the resulting files are recombined back into the image file.

US 2010/0235746 A1 performs a method at a multifunction device with a display and a touch-sensitive surface. User selection of an audio or video file to be sent in an electronic message is detected. In response to detecting a first input by the user, an audio or video file editing interface is displayed. The editing interface comprises: a time bar, a user-adjustable begin-edit icon, and a user-adjustable end-edit icon. The distance between the user-adjustable begin-edit icon and the user-adjustable end-edit icon is constrained to be equal to or less than a distance that corresponds to a predefined maximum allowable size for the file. In response to detecting a second input by the user on the touch-sensitive surface, at least one of the begin-edit icon and the end-edit icon is adjusted in the audio or video file editing interface. The audio or video file is edited to a shorter.

US 2013/0287370 A1 discloses systems, methods, and computer program products for importing multimedia files on a computing device. A graphical user interface (GUI) presents multimedia files as the multimedia files are imported. The multimedia files are image files, video files, and audio files. The imported multimedia files are presented in a parade. The user scrolls between the multimedia files presented in the parade. Multimedia files are displayed coincident to import of other multimedia files. One or more options for adjusting the imported multimedia files are selected while the multimedia files are presented in the parade. Actions associated with the one or more options for adjusting the imported multimedia files are effected on a multimedia file in real-time during presentation of the multimedia file in the parade.

EP 1 885 120 A2 discloses an apparatus and a method for taking a moving picture in a portable terminal. The apparatus includes a camera unit taking a moving picture frame; a compressor compressing the moving picture frame taken by the camera unit; a margin measurer ascertaining whether a size of the moving picture frame compressed by the compressor is being increased, and if the size of the moving picture frame is being increased, calculating an increased margin; and a picture taking ending determiner ending taking the moving picture frame if a size obtained through an addition of the increased margin to a whole size of the moving picture frame compressed and accumulated by the compressor is greater than a predetermined size.

US 2002/0112005 A1 discloses a method and apparatus for providing a video e-mail kiosk for creating and sending video e-mail messages such as full motion videos or still snapshots. The method comprises recording a video message, requesting an e-mail address of an intended recipient, and sending the video message to the intended recipient. The apparatus comprises a display device capable of displaying video and computer graphics, an input device capable of accepting input from a user, a digital video camera, a microphone, a digital network communications link, and a processor connected to the display device, the input device, the digital video camera, the microphone, and the digital network communications link, and capable of accepting an input from a user and generating display output, and further capable of converting a video input from the digital video camera and an audio input from the microphone into a digital video e-mail message and transmitting the digital video e-mail message over the digital network communications link.

US 2011/0189982 A1 discloses that when a user performs a playback operation, an imaging unit starts taking images, and video data based on the image data obtained from that imaging is stored in a buffer of a memory unit. A control unit writes the video data stored in the buffer in a newly opened image file. When the capacity of the image file reaches a limit capacity, the control unit closes that image file and opens a new image file. The control unit also writes video data to the opened image file. The control unit creates information (image file information) for the generated image file and enters that information in an image management table. When a plurality of image files is generated, the control unit stores information indicating the playback order of the image files in the image management table.

### DISCLOSURE OF THE INVENTION

### TECHNICAL TASKS

One object of the present invention is to provide a mobile terminal enhancing user convenience.

Another object of the present invention is to provide a mobile terminal capable of attaching a video of a big size to a message and a method of controlling therefor.

Technical tasks obtainable from the present invention are non-limited the above-mentioned technical task. And, other unmentioned technical tasks can be clearly understood from the following description by those having ordinary skill in the technical field to which the present invention pertains.

### TECHNICAL SOLUTION

The above identified problems are solved by the features of the independent claims. Embodiments and/or examples of the following description, which are not covered by the appended claims, are considered as not being part of the present invention. According to one embodiment, a mobile terminal includes a display unit configured to display information, a wireless communication unit configured to perform wireless communication, a memory configured to store a video and a controller, if a size of the video is bigger than a limit size of an attachable file supported by a messaging service usable for transmitting the video, configured to generate a plurality of slice files from the video in accordance with the limit size, the controller configured to control one of a plurality of the slice files to be attached to a message.

According to a different embodiment, a method of controlling a mobile terminal can include the steps of selecting a messaging service and a video to be attached to a message, if a size of the message is bigger than a limit size of an attachable file supported by the messaging service, generating a plurality of slice files from the video in accordance with the limit size and attaching one of a plurality of the slice files to the message.

Technical solutions obtainable from the present invention are non-limited the above-mentioned technical solutions. And, other unmentioned technical solutions can be clearly understood from the following description by those having
ordinary skill in the technical field to which the present invention pertains.

### ADVANTAGEOUS EFFECTS

Accordingly, a mobile terminal and a method of controlling therefor according to the present invention provide the following effects or advantages.

First of all, according to at least one of embodiments of the present invention, it is able to provide a mobile terminal enhancing user convenience.

According to at least one of embodiments of the present invention, it is able to provide a mobile terminal capable of attaching a video of a big size to a message and a method of controlling therefor.

Effects obtainable from the present invention may be non-limited by the above mentioned effect. And, other unmentioned effects can be clearly understood from the following description by those having ordinary skill in the technical field to which the present invention pertains.

### DESCRIPTION OF DRAWINGS

FIG. 1 is a block diagram of a mobile terminal according to one embodiment of the present invention;
FIG. 2 is a front perspective diagram of a mobile terminal according to one embodiment of the present invention;
FIG. 3 is a rear perspective diagram of a mobile terminal according to one embodiment of the present invention;
FIGS. 4a to 4e are diagrams for explaining a video editing function;
FIG. 5 is a flowchart for an operation of a mobile terminal 100 according to one embodiment of the present invention;
FIGS. 6a to 6c are diagrams for explaining an operation of a mobile terminal 100 when a video bigger than an attached file attachable to a message is attached in a state of executing a messaging service;
FIGS. 7a to 7c are diagrams for explaining an operation of a mobile terminal 100 when a video in playing is bigger than an attached file attachable to a message;
FIG. 8 is a flowchart for an operation of a mobile terminal 100 according to one embodiment of the present invention;
FIGS. 9a to 9c are diagrams for explaining an operation of a mobile terminal 100 when a video bigger than an attached file attachable to a message is attached in a state of executing a messaging service;
FIG. 10 is a diagram for explaining an operation of a mobile terminal 100 when a video in playing is bigger than an attached file attachable to a message;
FIGS. 11a to 11c are diagrams for an example that a highlighted part of a video is automatically configured as a section to be trimmed;
FIGS. 12a to 12c are diagrams for explaining an operation of a mobile terminal 100 when a video in editing is to be shared;
FIG. 13 is a flowchart for an operation of a mobile terminal 100 according to one embodiment of the present invention;
FIGS. 14a and 14b are diagrams for explaining an operation of a mobile terminal 100 when a video bigger than an attached file attachable to a message is attached in a state of executing a messaging service;
FIG. 15 is a diagram for an example of selecting a messaging service, which is used for transmitting a video to be captured, from a capturing screen;
FIG. 16 is a diagram for an example of selecting a messaging service, which is used for sharing a video with each other, in the middle of capturing the video;
FIG. 17 is a flowchart for an operation of a mobile terminal 100 according to one embodiment of the present invention;
FIGS. 18a and 18b are diagrams for explaining an example of generating a plurality of video files when a video is captured;
FIG. 19 is a diagram for an example of recommending a messaging service suitable for a size of a video.

### BEST MODE

### MODE FOR INVENTION

The mobile terminal according to current invention will be described with the accompanying drawings.

As used herein, the suffixes 'module', 'unit' and 'part' are used for elements in order to facilitate the disclosure only.

The present invention can be applicable to a various types of mobile terminals. Examples of such terminals include mobile phones, user equipments, smart phones, digital broadcast receivers, personal digital assistants, laptop computers, portable multimedia players (PMP), navigators and the like.

Yet, it is apparent to those skilled in the art that a configuration according to an embodiment disclosed in this specification is applicable to such a fixed terminal as a digital TV, a desktop computer and the like as well as a mobile terminal.

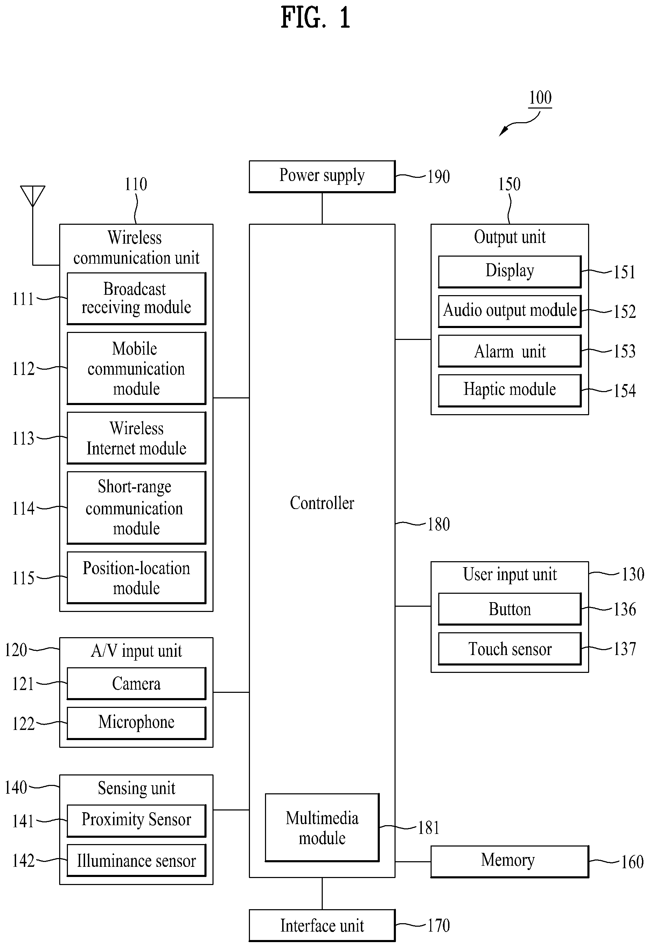

Fig. 1 is a block diagram of a mobile terminal 100 in accordance with an embodiment of the present invention. Fig. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided to the mobile terminal 100 in pursuit of simultaneous receptions of at least two broadcast channels or broadcast channel switching facilitation.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), Convergence of Broadcasting and Mobile Service(DVB-CBMS), Open Mobile Alliance-BroadCAST(OMA-BCAST), China Multimedia Mobile Broadcasting (CMMB), Mobile Broadcasting Business Management System(MBBMS), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.) via a mobile network such as GSM (Global System for Mobile communications), CDMA (Code Division Multiple Access), WCDMA (Wideband CDMA) and so on. Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), GSM, CDMA, WCDMA, LTE (Long Term Evolution) etc.

Wireless internet access by Wibro, HSPDA, GSM, CDMA, WCDMA, LTE or the like is achieved via a mobile communication network. In this aspect, the wireless internet module 113 configured to perform the wireless internet access via the mobile communication network can be understood as a sort of the mobile communication module 112.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module. According to the current technology, the GPS module 115 is able to precisely calculate current 3-dimensional position information based on at least one of longitude, latitude and altitude and direction (or orientation) by calculating distance information and precise time information from at least three satellites and then applying triangulation to the calculated information. Currently, location and time informations are calculated using three satellites, and errors of the calculated location position and time informations are then amended using another satellite. Besides, the GPS module 115 is able to calculate speed information by continuously calculating a real-time current location.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a button 136 provided to front/rear/lateral side of the mobile terminal 100 and a touch sensor (constant pressure/electrostatic) 137 and may further include a key pad, a dome switch, a jog wheel, a jog switch and the like [not shown in the drawing].

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. By nonlimiting example, such sensing unit 140 include, gyro sensor, accelerate sensor, geomagnetic sensor.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, and a haptic module 154 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display 151 can be implemented in the optical transmittive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and the touch sensor 137 configures a mutual layer structure (hereinafter called 'touch screen'), it is able to use the display 151 as an input device as well as an output device. In this case, the touch sensor can be configured as a touch film, a touch sheet, a touchpad or the like.

The touch sensor 137 can be configured to convert a pressure applied to a specific portion of the display 151 or a variation of a capacitance generated from a specific portion of the display 151 to an electric input signal. Moreover, it is able to configure the touch sensor 137 to detect a pressure of a touch as well as a touched position or size.

If a touch input is made to the touch sensor 137, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

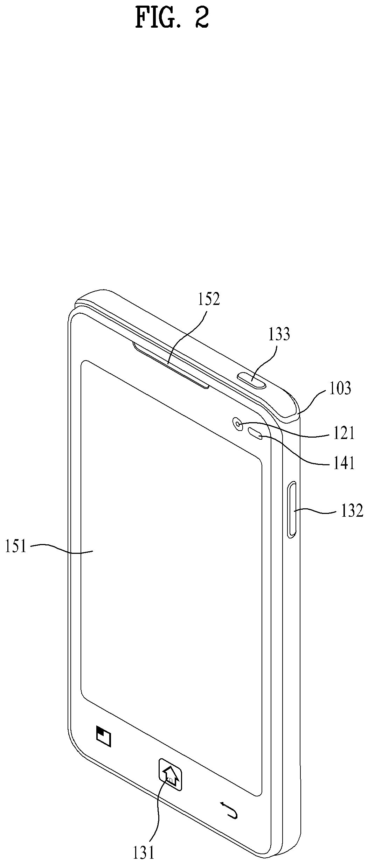

Referring to FIG. 2, a proximity sensor (141) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

For clarity and convenience of the following description, as a pointer becomes proximate to a touchscreen without coming into contact with the touchscreen, if the pointer is perceived as situated over the touchscreen, such an action shall be named 'proximity touch'. If a pointer actually comes into contact with a touchscreen, such an action shall be named 'contact touch'. A proximity-touched position over the touchscreen with the pointer may mean a position at which the pointer vertically opposes the touchscreen when the touchscreen is proximity-touched with the pointer.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

A battery may include a built-in rechargeable battery and may be detachably attached to the terminal body for a charging and the like. A connecting port may be configured as one example of the interface 170 via which an external charger for supplying a power of a battery charging is electrically connected.

Various embodiments described herein may be implemented in a computer-readable medium using, for example, computer software, hardware, or some combination thereof.

For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

FIG. 2 is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However, such teachings apply equally to other types of mobile terminals.

Referring to FIG. 2, the mobile terminal 100 includes a case (101, 102, 103) configuring an exterior thereof. In the present embodiment, the case can be divided into a front case 101 and a rear case 102. Various electric/electronic parts are loaded in a space provided between the front and rear cases 101 and 102.

Occasionally, electronic components can be mounted on a surface of the rear case 102. The electronic part mounted on the surface of the rear case 102 may include such a detachable part as a battery, a USIM card, a memory card and the like. In doing so, the rear case 102 may further include a backside cover 103 configured to cover the surface of the rear case 102. In particular, the backside cover 103 has a detachable configuration for user's convenience. If the backside cover 103 is detached from the rear case 102, the surface of the rear case 102 is exposed.

Referring to FIG. 2, if the backside cover 103 is attached to the rear case 102, a lateral side of the rear case 102 may be exposed in part. If a size of the backside cover 103 is decreased, a rear side of the rear case 102 may be exposed in part. If the backside cover 103 covers the whole rear side of the rear case 102, it may include an opening 103' configured to expose a camera 121' or an audio output unit 152' externally.

The cases 101, 102 and 103 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the case 101 or 102.

The display 151 occupies most of a main face of the front case 101. The audio output unit 152 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152 and the like can be inputted to the second manipulating unit 132, a command for a switching to a touch recognizing mode of the display 151 and the like can be inputted to a third manipulating unit 133.

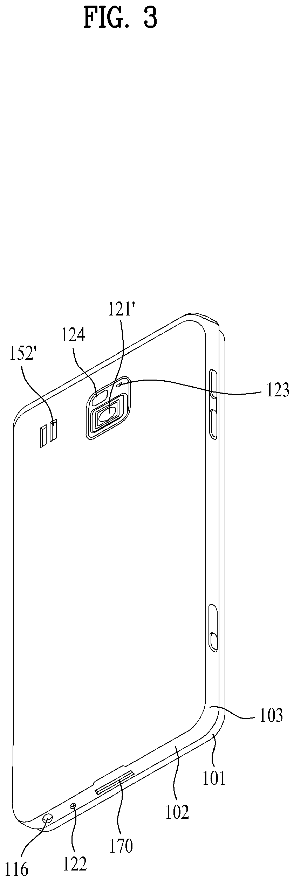

FIG. 3 is a perspective diagram of a backside of the terminal shown in FIG. 2.

Referring to FIG. 3, a camera 121' can be additionally provided to a backside of the terminal body, and more particularly, to the rear case 102. The camera 121 has a photographing direction that is substantially opposite to that of the former camera 121 shown in FIG. 2 and may have pixels differing from those of the firmer camera 121.

Preferably, for instance, the former camera 121 has low pixels enough to capture and transmit a picture of user's face for a video call, while the latter camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2 and may be used for implementation of a speakerphone mode in talking over the terminal.

A broadcast signal receiving antenna 116 can be additionally provided to the lateral side of the terminal body as well as an antenna for communication or the like. The antenna 116 constructing a portion of the broadcast receiving module 111 shown in FIG. 1 can be retractably provided to the terminal body.

A power supply unit 190 configured to supply power to a mobile terminal 100 is installed in a terminal body. The power supply unit 190 is installed in the inside of the terminal body or can be removable from the external of the terminal body.

A touch pad 135 configured to detect a touch can be additionally installed in a rear case 102. The touch pad 135 can be configured by a light penetration type for a display unit 151. In this case, if both sides (i.e., both directions of a front side and a rear side of a mobile terminal) of the display unit 151 are configured to output visual information, it may also be able to recognize the visual information via the touch pad 135. All of the information outputted on both sides can be controlled by the touch pad 135.

Meanwhile, if a display dedicated to the touch pad 135 is separately installed, a touch screen can also be arranged at the rear case 102.

The touch pad 135 works in a manner of being interrelated with the display unit 151 of a front case 101. The touch pad 135 can be horizontally arranged at a rear side of the display unit 151. The touch pad 135 may have a size equal to or smaller than a size of the display unit 151.

For clarity, assume that a mobile terminal 100 described in the present invention includes at least one or more components shown in FIG. 1. Specifically, assume that the mobile terminal 100 according to the present invention includes a wireless communication unit 110, a display unit 151, a memory 160 and a controller 180. In some cases, it may be assumed that the mobile terminal 100 according to the present invention further includes a camera 121.

Moreover, since the mobile terminal 100 according to the present invention can be more easily implemented when the display unit 151 corresponds to a touch screen, assume that the display unit 151 corresponds to a touch screen in the following embodiments.

A video stored in the mobile terminal 100 can be transmitted to a different terminal via such a message of various types as e-mail, a text message (e.g., MMS), an instant message (IM) or the like. Specifically, the controller 180 configures a video as an attached file of a message and may be than able to control the message to which the video is attached to be transmitted to a different mobile terminal 100.

Yet, a service provider providing a messaging service sets a restriction on a size of a file attachable to a message. This is intended to prevent a server transmitting and receiving the message from being overloaded and prevent excessive amount of traffic from being occurred in the mobile terminal 100. As an example, a size of an attached file of an e-mail service provided by a company A corresponds to 20 Mbytes, whereas a size of an attached file of an e-mail service provided by a company B may correspond to 10 Mbytes. A size of an attached file of a text message service provided by a company C corresponds to 5 Mbytes, whereas a size of an attached file of a text message service provided by a company D may correspond to 2 Mbytes.

If a size of a video is greater than a size of a file attachable in a prescribed message service, it is necessary to firstly reduce the size of the video and then attach the video of which the size is reduced. To this end, the mobile terminal 100 according to the present invention can provide a video editing function for reducing a size of a video.

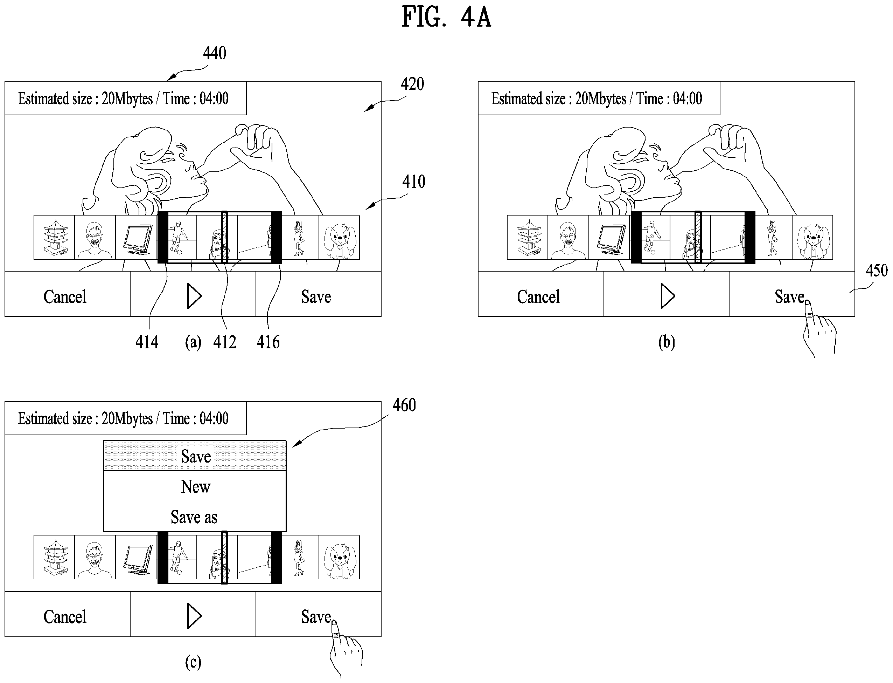

As an example, FIGS. 4a to 4e are diagrams for explaining a video editing function.

As shown in FIG. 4a (a), in order to edit a video, the controller 180 can display a frame (i.e., a still cut) 420 included in the video or can control thumbnail images of frames included in the video to be displayed via a progress bar 410 while playing the video.

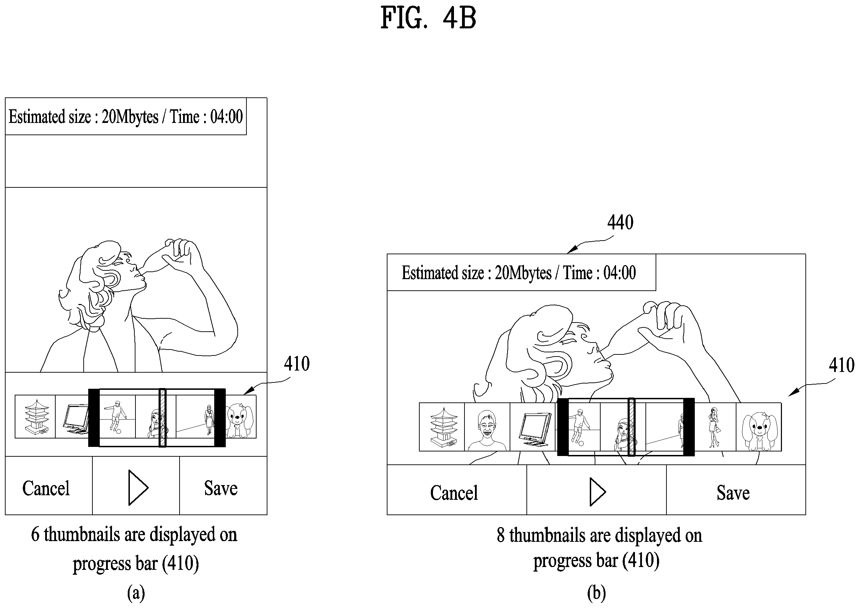

The number of thumbnail images displayed via the progress bar 410 may vary according to an output mode of the display unit 151. Specifically, when the display unit 151 is in a landscape mode, the controller 180 can control more thumbnail images to be displayed compared to when the display unit 151 is in a portrait mode. As an example, referring to an example shown in FIG. 4b (a), the display unit 151 is in the portrait mode and 6 thumbnail images are displayed on the progress bar 410. Referring to an example shown in FIG. 4b (b), the display unit 151 is in the landscape mode and 8 thumbnail images are displayed on the progress bar 410.

The controller 180 divides a video into a plurality of parts in accordance with the number of thumbnail images capable of being displayed on the progress bar 410 and can control a thumbnail image of a frame (e.g., a start frame of each part) representing each of a plurality of the parts to be displayed.

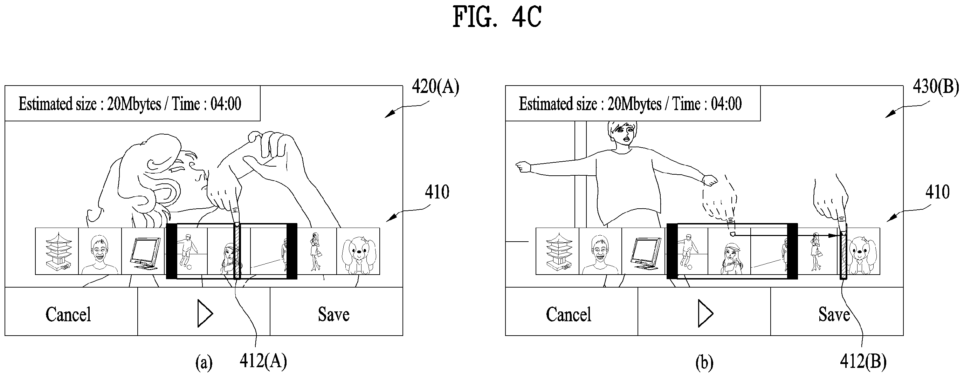

A current time indicator 412 indicating a position of a frame outputted via the display unit 151 or a position of current playback time can be displayed on the progress bar 410. If the current time indicator 412 moves on the progress bar 410, the controller 180 can control a frame corresponding to a position to which the current time indicator 412 has moved to be displayed. Or, the controller can control a video to be played from a position to which the current time indicator 412 has moved. As an example, FIG. 4c is a diagram showing an output change of the display unit 151 when the current time indicator 412 has moved. As shown in an example of FIG. 4c (a) and (b), if the current time indicator 412 moves from 'A' time to 'B' time, the controller 180 can control a frame 430 corresponding to the B time to be outputted via the display unit 151 or can control a video to be played from the B time.

An indicator indicating a start time and an end time of a section to be trimmed can be displayed on the progress bar. As an example, referring to an example shown in FIG. 4a (a), an indicator 414 indicating the start time and an indicator 416 indicating the end time form a rectangle on the progress bar.

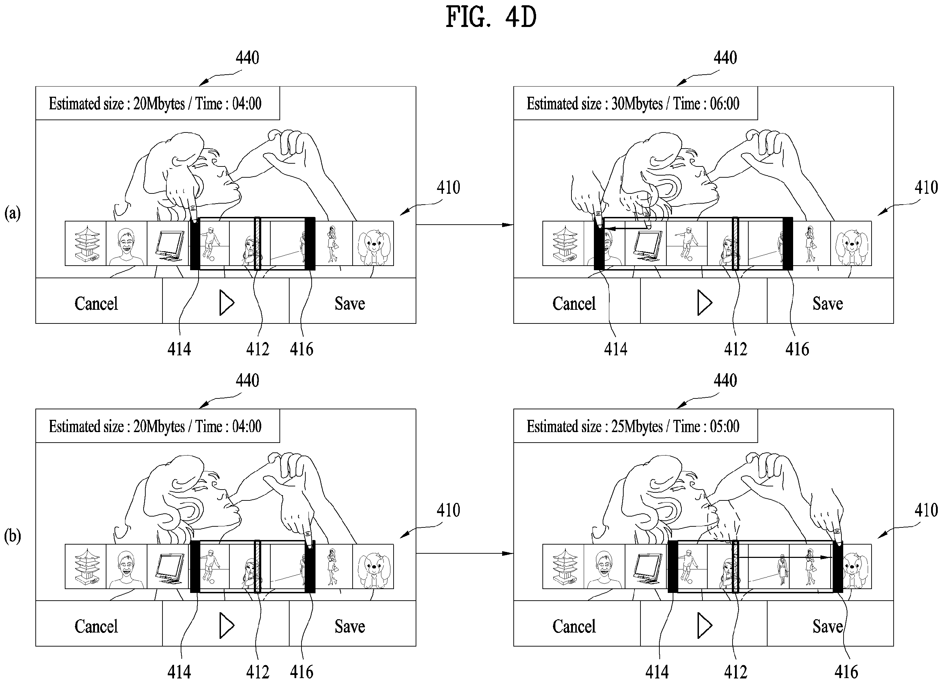

Positions of the start time indicator 414 and the end time indicator 416 shown in FIG. 4a can be controlled by a user input. As an example, as shown in an example of FIG. 4d (a), if a drag input is received on the start time indicator 414 indicating a start time of a section to be trimmed, the controller 180 can control the start time of the section to be trimmed to be changed according to the drag input. In the same manner, as shown in an example of FIG. 4d (b), if a drag input is received on the end time indicator 416 indicating an end time of a section to be trimmed, the controller 180 can control the end time of the section to be trimmed to be changed according to the drag input.

Although it is not depicted, it is apparent that a plurality of section to be trimmed can be configured on the progress bar 410.

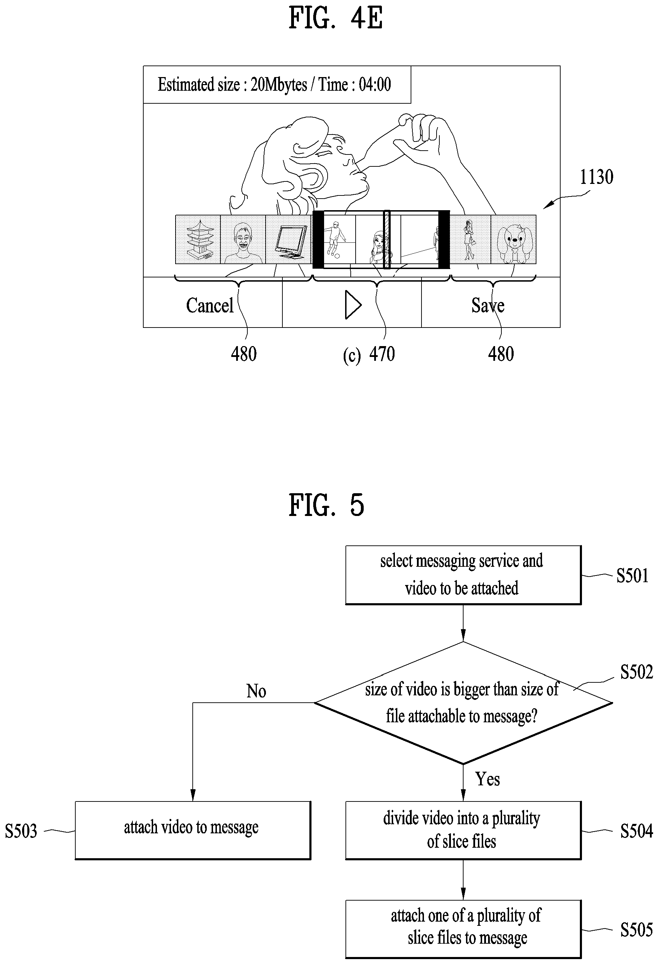

Moreover, the controller 180 can control a section to be trimmed to be visually identified on the progress bar 410. As an example, FIG. 4e is a diagram for an example of visually identifying a section to be trimmed. The controller 180 can control a section to be trimmed and other sections to be displayed in a manner of being visually distinguished from each other. As an example, as shown in an example of FIG. 4e, the controller 180 can control a section 470 to be trimmed and other sections 480 to be displayed in a manner of being visually distinguished from each other by controlling dimming process (i.e., display darkly) to be done on the remaining section 480 except the section 470 to be trimmed.

If a section to be trimmed is configured, the controller 180 can control information 440 on a length of the section and information on a file size estimated when the configured section is newly stored to be displayed. As an example, referring to an example of FIG. 4d (a), information 440 is displayed to indicate that a length of the section to be trimmed and a size of the section to be trimmed are changed from 4 minutes and 20 Mbytes to 6 minutes and 30 Mbytes, respectively. Referring to an example of FIG. 4d (b), information 440 is displayed to indicate that a length of the section to be trimmed and a size of the section to be trimmed are changed from 4 minutes and 20 Mbytes to 5 minutes and 25 Mbytes, respectively.

If a video editing completion command is inputted by a user, the controller 180 can store a section to be trimmed in a manner of trimming the section from a video. In case of storing the trimmed section, the controller 180 can store the trimmed section as a new video file or store the trimmed section instead of an original video.

As an example, as shown in an example of FIG. 4a (b), if a save button 450 is touched, as shown in FIG. 4a (c), the controller 180 can control a menu 460 capable of selecting a storing scheme of a section to be trimmed to be displayed. In FIG. 4a (c), 'New' item is used to save the trimmed section as a new video file and 'Save as' item is used to save the trimmed section instead of an original video.

If a plurality of sections to be trimmed are configured on the progress bar, the controller 180 can save each of a plurality of the section as a separate file or may be able to save a plurality of the sections as a single file in a manner of combining a plurality of the sections with each other.

As shown in an example of FIG. 4a (c), the controller 180 extracts a partial section from a video and may be then able to separately save the partial section irrespective of an original video or may be able to save the partial section by overwriting the original video. In particular, a result of a video editing may correspond to an update of the original video (i.e., a case that the extracted section overwrites the original video) or a separate file irrespective of the original video. For clarity, a result (i.e., an updated original video or a video derived from the original video) caused by video editing is called a 'edited video' in embodiments described in the following.

As shown in FIGS. 4a to 4d, if a part of a video is trimmed and stored, a size of the video can be adjusted to a size capable of being attached to a message. Yet, video editing shown in FIGS. 4a to 4d should be performed by a suitable operation of a user in terms of a configuration of a section to be trimmed and the like, it may cause inconvenient for the user.

Hence, the mobile terminal 100 according to the present invention can divide a video into a plurality of slice files in accordance with a size of a file attachable to a message and may be then able to control at least one or more divided slice files to be attached to a message. Regarding this, it shall be explained in detail with reference to an operation flowchart described in the following.

FIG. 5 is a flowchart for an operation of a mobile terminal 100 according to one embodiment of the present invention. Referring to FIG. 5, first of all, if a messaging service and a video to be attached to a message are selected [S501], the controller 180 can compare a size of the video and a size of a file attachable to a message with each other [S502]. In this case, the messaging service capable of being selected by a user includes e-mail, a text message (specifically, MMS), an instant message, SNS and the like. Moreover, as mentioned in the foregoing description, a size of a file attachable to a message may vary depending on a selected message type and a service provider proving a selected messaging service.

If the size of the video is less than the size of the file attachable to the message [S502], the controller 180 can control the video to be attached to the message [S503].

On the contrary, if the size of the video is greater than the size of the file attachable to the message [S502], the controller 180 divides the video into a plurality of slice files in accordance with the size of the file attachable to the message [S504] and can control one of a plurality of the divided slice files to be attached to the message [S505]. As an example, if a size of a video corresponds to 80 Mbytes and a maximum size of a file attachable to a message corresponds to 20 Mbytes, the controller 180 divides the video into 4 slice files of which each size corresponds to 20 Mbytes and can control one of the 4 slice files to be attached to the message. In this case, the controller 180 can control a slice file of a first order among a plurality of the slice files to be attached to the message. As a different example, a slice file to be attached to the message can be manually determined by a user input.

An embodiment of dividing a video into a plurality of slice files and attaching one of a plurality of the divided slice files to a message is explained in detail with reference to drawings described in the following.

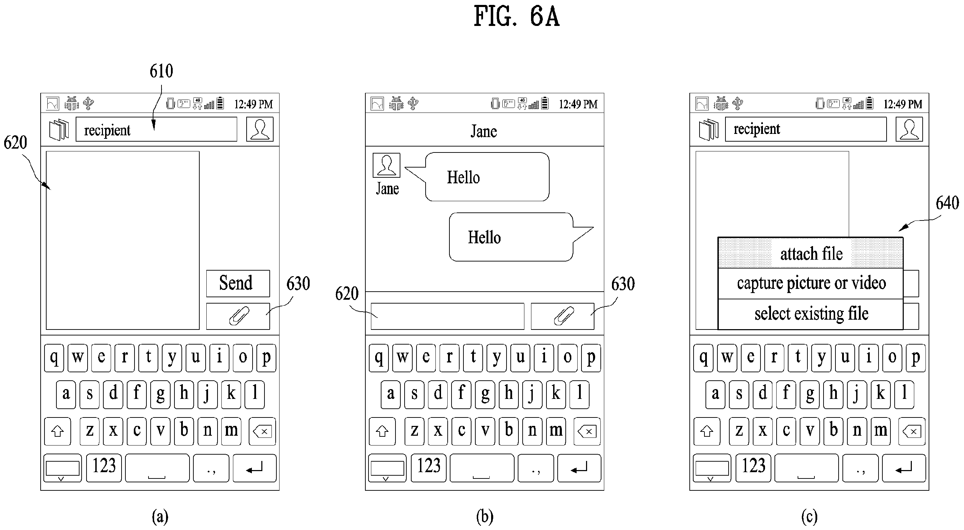

FIGS. 6a to 6c are diagrams for explaining an operation of a mobile terminal 100 when a video bigger than an attached file attachable to a message is attached in a state of executing a messaging service.

If a specific messaging service is executed and a command for writing a new message is inputted, as shown in an example of FIG. 6a (a), the controller 180 can control a message writing screen to be displayed. Referring to the example of FIG. 6a (a), the message writing screen includes a recipient input area 610 for inputting a recipient to which a message is transmitted and a message input area 620 for inputting message content.

A message writing screen can be displayed only after a recipient to which a message is transmitted is specified. In this case, as shown in an example of FIG. 6a (b), the message writing screen may include the message input area only while omitting the recipient input area 610. Moreover, the controller 180 can control message contents, which are previously transceived with a corresponding recipient, to be displayed via a partial area of the display unit 151.

Yet, it is not mandatory to configure the message writing screen as the examples shown in FIG. 6a (a) and FIG. 6a (b). It is apparent that a message writing screen different from the message writing screen shown in FIG. 6a (a) and FIG. 6a (b) can be configured.

An attached file button 630 for selecting a file to be attached to a message can be displayed on a message writing screen. If the attached filed button 630 shown in FIG. 6a (a) and FIG. 6a (b) is selected, as shown in an example of FIG. 6a (c), the controller 180 can control a menu 640 for selecting a file, which is to be attached to a message, to be displayed.

In the menu 640 shown in FIG. 6a (c), 'Capture picture or video' item is used for newly capturing an image or a video via a camera 121 and then attaching a captured picture or a captured video to a message. 'Select existing file' item is used for attaching an image or a video previously stored in a memory 160 to a message.

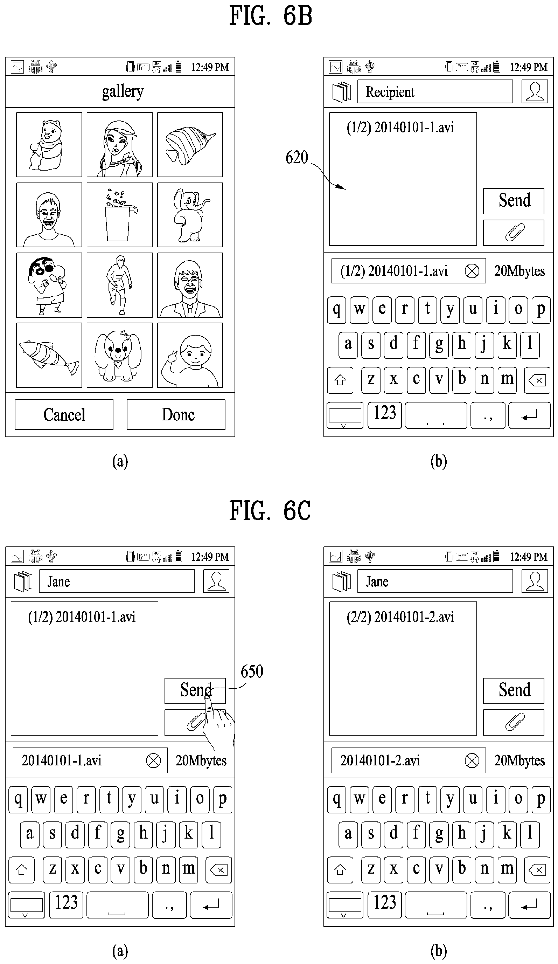

In the menu 640 shown in FIG. 6a (c), if 'Select existing file' item is touched, as shown in an example of FIG. 6b (a), the controller 180 can display a list of images and videos stored in the memory 160. If a size of a video selected from the list of images and videos is smaller than a size of a file attachable to a message, the controller 180 can configure the selected video as an attached file of the message. As an example, if a size of a file attachable to a message corresponds to 20 Mbytes and a size of a video to be attached to the message corresponds to 8 Mbytes, the controller 180 can control the video to be attached to the message.

On the contrary, if a size of a video selected from the list of images and videos is greater than a size of a file attachable to a message, the controller 180 can divide the video into a plurality of slice files in accordance with the size of the file attachable to the message. As an example, if a size of a file attachable to a message corresponds to 20 Mbytes and a size of a video to be attached to the message corresponds to 30 Mbytes, the controller 180 can divide the video into two slice files smaller than the file attachable to the message. In this case, among the two slice files, a size of one slice file may become 20 Mbytes identical to the size of the file attachable to the message and a size of another slice file may become 10 Mbytes. Or, a size of the two slice files may have an identical size of 15 Mbytes. If a video is divided into a plurality of slice files, the controller 180 can control one of a plurality of the slice files to be attached to a message. In addition, the controller 180 can control information on the total number of slice files and information on an order of a slice file attached to a message to be automatically recorded in a message input area. As an example, '(1/2)' recorded in the message input area 620 shown in FIG. 6b (b) may indicate that a first slice file among the total 2 slice files is attached to a message.

If a message to which one of a plurality of slice files is attached is transmitted, the controller 180 can control a message writing screen to be automatically displayed to transmit a message to which a slice file of a next order is attached. As an example, as shown in an example of FIG. 6c (a), if a send button 650 is touched and a message to which a first slice file is attached is transmitted, as shown in an example of FIG. 6c (b), the controller 180 can control a message writing screen for transmitting a message to which a second slice file is attached to be displayed. In this case, the controller 180 can configure a person identical to a recipient of the first message as a recipient of the message to which the second slice file is attached.

Although it is not depicted, if the message to which the first slice file is attached is transmitted, the controller 180 can control the message to which the second slice file is attached to be immediately transmitted to a recipient who has transmitted the first message without displaying a message writing screen.

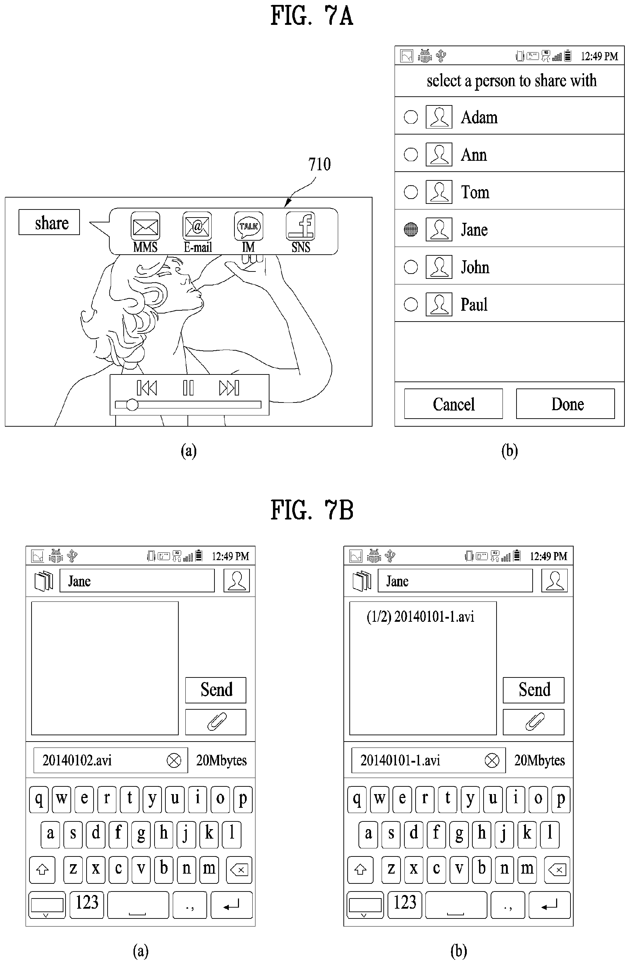

FIGS. 7a to 7c are diagrams for explaining an operation of a mobile terminal 100 when a video in playing is bigger than an attached file attachable to a message.

If a command for sharing a video is inputted in the middle of playing the video, as shown in an example of FIG. 7a (a), the controller 180 can control a list 710 in which messaging services capable of being used for sharing the video are listed to be displayed. Referring to the example of FIG. 7a (a), a plurality of icons respectively indicating messaging services different from each other configure the list. Moreover, the list shown in FIG. 7a (a) includes a text message, E-mail, an instant message, and SNS and the like as messaging services capable of sharing a video. Although it is not depicted, the controller 180 can control information on a size of a file attachable according to a messaging service to be displayed on each item (i.e., each icon) of the list.

If a specific messaging service is selected from the list 710 shown in FIG. 7a (a), the controller 180 can control a message writing screen to be displayed to transmit a message to which a video in playing is attached. Prior to displaying the message writing screen, as shown in an example of FIG. 7a (b), the controller 180 can control a recipient list to be displayed to select a recipient to which the message is to be transmitted. The recipient list can be configured based on a contact list stored in the memory 160 or a contact list stored in an external server (e.g., a server providing an instant messaging service, an e-mail server, an SNS server or the like). In this case, the controller 180 can control the message writing screen to be displayed after at least one or more persons are selected from the recipient list.

If a size of the video in playing is smaller than a size of a file attachable to a message, as shown in an example of FIG. 7b (a), the controller 180 can control the video in playing to be configured as an attached file of a message. As an example, if a size of a file attachable to a message corresponds to 20 Mbytes and a size of a video in playing corresponds to 8 Mbytes, the controller 180 can control the video to be attached to the message.

On the contrary, if a size of a video in playing is bigger than a size of a file attachable to a message, the controller 180 can divide the video into a plurality of slice files in accordance with the size of the file attachable to the message. As an example, if a size of a file attachable to a message corresponds to 20 Mbytes and a size of a video in playing corresponds to 30 Mbytes, the controller 180 can divide the video into 2 slice files smaller than the file attachable to the message. If a video is divided into a plurality of slice files, the controller 180 can control one of a plurality of the slice files to be attached to a message. In addition, the controller 180 can control information on the total number of slice files and information on an order of a slice file attached to a message to be automatically recorded in a message input area. As an example, '(1/2)' recorded in the message input area shown in FIG. 7b (b) may indicate that a first slice file among the total 2 slice files is attached to a message.

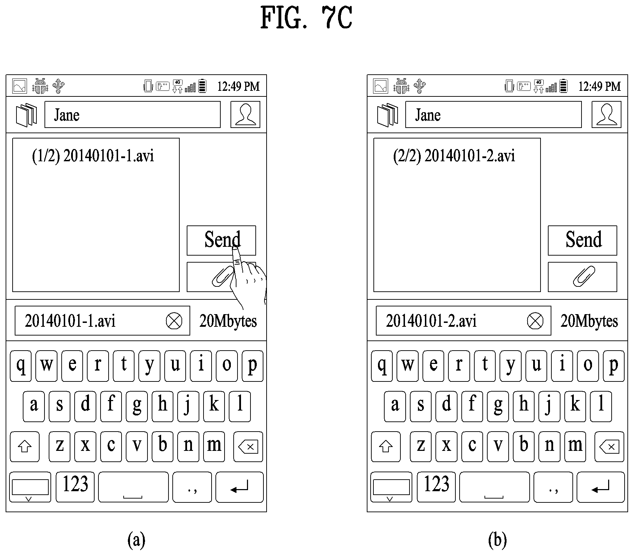

If a message to which one of a plurality of slice files is attached is transmitted, the controller 180 can control a message writing screen to be automatically displayed to transmit a message to which a slice file of a next order is attached. As an example, as shown in an example of FIG. 7c (a), if transmission of a message to which a first slice file is attached is completed, as shown in an example of FIG. 7c (b), the controller 180 can control a message writing screen to be immediately displayed to transmit a message to which a second slice file is attached.

Although it is not depicted, if transmission of the message to which the first slice file is attached is completed, the controller 180 can control the message to which the second slice file is attached to be immediately transmitted.

Referring to the aforementioned embodiments, if a size of a video is bigger than a size of a file attachable to a message, the controller 180 can divide the video into a plurality of slice files respectively including a size smaller than the size of the file attachable to the message.

According to a different embodiment of the present invention, if a size of a video is bigger than a size of a file attachable to a message, the controller 180 may generate a slice file smaller than the size of the file attachable to the message from the original video. As an example, if a size of a video corresponds to 30 Mbytes and a size of a file attachable to a message corresponds to 20 Mbytes, the controller 180 generates a slice file smaller than 20 Mbytes from the video and can control the generated slice file to be attached to the message.

According to a further different embodiment of the present invention, if a size of a video is bigger than a size of a file attachable to a message, the controller 180 may be able to control a video editing function to be executed to edit the video to a size smaller than the size of the file attachable to the message. Regarding this, it shall be described in detail with reference to drawings in the following.

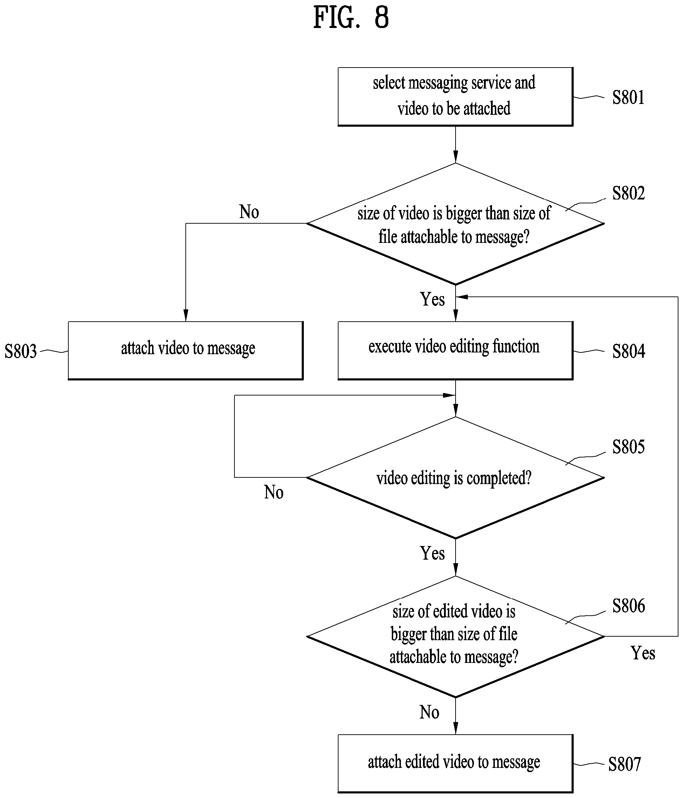

FIG. 8 is a flowchart for an operation of a mobile terminal 100 according to one embodiment of the present invention. Referring to FIG. 8, first of all, if a messaging service and a video to be attached to a message are selected [S801], the controller 180 can compare a size of the video and a size of a file attachable to a message with each other [S802].

If the size of the video is less than the size of the file attachable to the message [S802], the controller 180 can control the video to be attached to the message [S803].

On the contrary, if the size of the video is greater than the size of the file attachable to the message [S802], the controller 180 can control a video editing function to be executed to reduce the size of the video to a size smaller than the size of the file attachable to the message [S804]. If the size of the video is adjusted to the size smaller than the size of the file attachable to the message via video editing [S805, S806], the controller 180 can control the video of which the editing is completed to be attached to the message [S807].

When a size of a video is bigger than a size of a file attachable to a message, an example of executing a video editing function is explained in detail with reference to drawings in the following description.

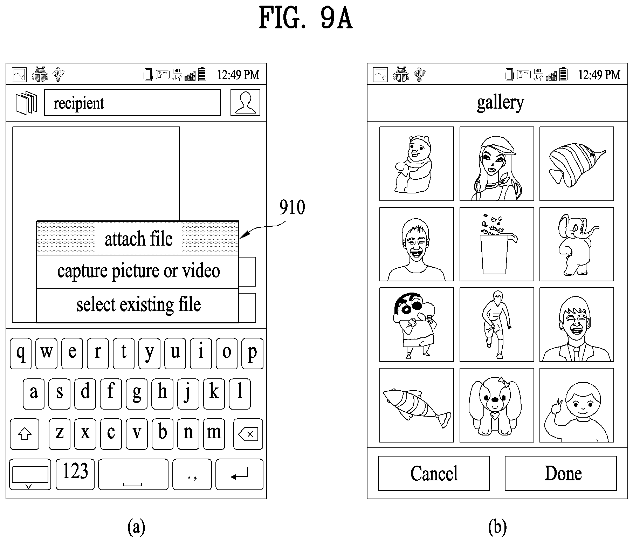

FIGS. 9a to 9c are diagrams for explaining an operation of a mobile terminal 100 when a video bigger than an attached file attachable to a message is attached in a state of executing a messaging service.

If an attached file button displayed on a message writing screen is touched, as shown in an example of FIG. 9a (a), the controller 180 can control a menu 910 for selecting a file to be attached to a message to be displayed.

In the menu 910 shown in FIG. 9a (a), if 'select existing file' item is touched, as shown in an example of FIG. 9a (b), the controller 180 can display a list of images and videos stored in the memory 160. If a size of a video selected from the list of the images and the videos is smaller than a size of a file attachable to a message, the controller 180 can configure the selected video as an attached file of the message.

On the contrary, if the size of the selected video is bigger than the size of the file attachable to the message, the controller 180 can control a video editing function for controlling the size of the video to be executed.

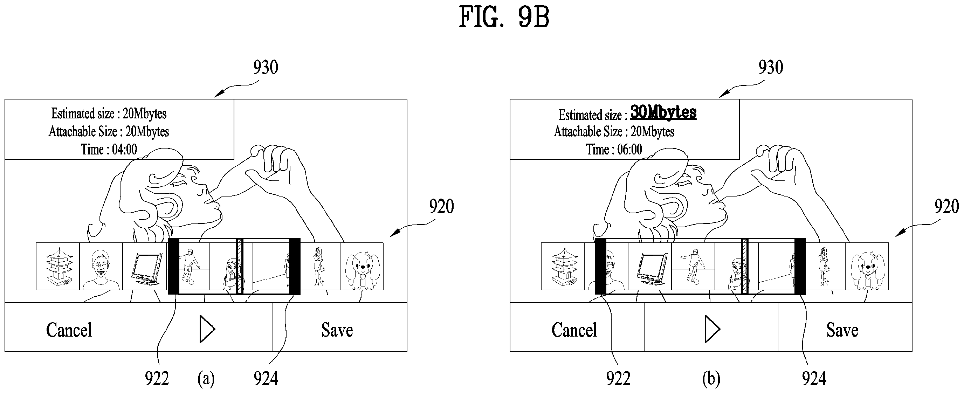

As an example, FIG. 9b is a diagram for an example of executing the video editing function. As mentioned earlier in FIG. 4a, an indicator 922/924 indicating a start point and an end point of a section to be trimmed can be displayed on a progress bar 920.

A user can configure a section to be trimmed in a manner of adjusting a position of a start time indicator 922 and a positon of an end time indicator 924. In this case, a length between the start time indicator 922 and the end time indicator 924 can be restricted by a size of a file attachable to a message. As an example, if the size of the file attachable to the message corresponds to 20 Mbytes, the controller 180 may be able to set a limit on the length between the start time indicator 922 and the end time indicator 924 to make a size of a trimmed video to be less than 20 Mbytes. As an example, when running time corresponds to 4 minutes, if a size of a video becomes 20 Mbytes, the start time indicator 922 and the end time indicator 922 can be separated from each other as long as maximum 4 minutes.

As a different example, if a size of a video, which is anticipated when a section between start time and end time is trimmed, is bigger than a size of a file attachable to a message, the controller 180 can control feedback to be outputted to indicate that a video to be trimmed is unable to be attached to the message. As an example, as shown in examples of FIG. 9b (a) and (b), the controller 180 can control information on the size of the video, which is anticipated when the section between the start time and the end time is trimmed, and information 930 on the size of the file attachable to the message to be displayed on the display unit 151. In this case, if the size of the video, which is anticipated when the section between the start time and the end time is trimmed, is bigger than the size of the file attachable to the message, as shown in an example of FIG. 9b (b), the controller 180 can inform a user of a state that the video is unable to be attached to the message by highlighting the information on the size of the video to be trimmed. Besides, the controller 180 can inform a user that a size of a video, which is anticipated to be generated as a result of editing, is bigger than a size of a file attachable to a message via output of warning sound, output of vibration, flickering LED or the like.

As mentioned earlier in FIG. 4c, a length of a section to be trimmed may vary according to a touch input of a user. Yet, as shown in an example of FIG. 9b (b), if a size of a file, which is anticipated when a configured section is trimmed, is bigger than a size of a file attachable to a message, a video of which editing is completed cannot be attached to the message unless the video is divided into a plurality of slice files. Hence, when a user intends to adjust a position of the start time indicator 922 and a position of the end time indicator 924, the controller 180 may be able to recommend the position of the start time indicator 922 and the position of the end time indicator 924 to the user in accordance with the size of the file attachable to the message.

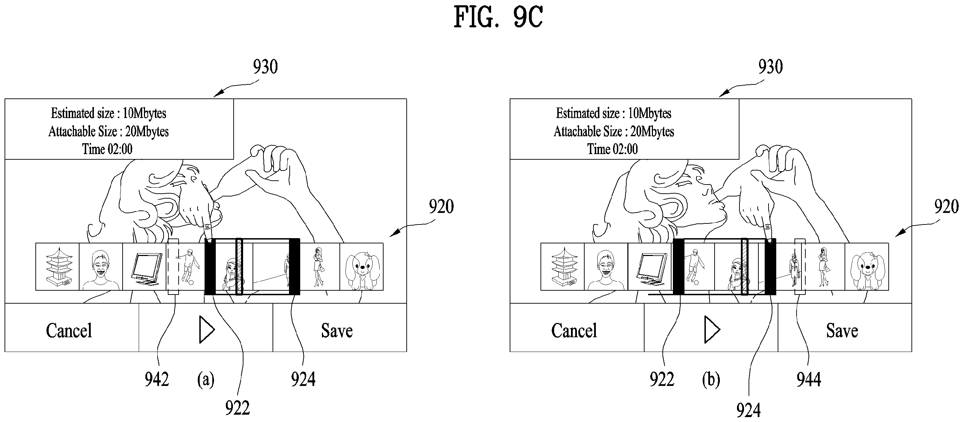

As an example, FIG. 9c is a diagram for an example of displaying recommended positions of a start time indicator 922 and an end time indicator 924. If the start time indicator 922 is touched, the controller 180 can control a recommended position 942 of the start time indicator 922 to be displayed in accordance with a size of a file attachable to a message. In this case, the controller 180 can determine the recommended position 942 based on a position of the end time indicator 924 and the size of the file attachable to the message. If a maximum length between the start time indicator 922 and the end time indicator 924 calculated based on the size of the file attachable to the message corresponds to 4 minutes, the controller 180 can configure the recommended position 942 at a position apart from the end time indicator 924 as far as 4 minutes. If the start time indicator 922 is touched in a state that a size of a file, which is anticipated when a configured section is trimmed, is smaller than the size of the file attachable to the message, as shown in an example of FIG. 9c (a), the recommended positon 942 can be displayed at the left of the start time indicator 922. Although it is not depicted, if the start time indicator 922 is touched in a state that a size of a file, which is anticipated when a configured section is trimmed, is bigger than the size of the file attachable to the message, the recommended position 942 can be displayed at the right of the start time indicator 922. A user can determine whether a length of a section to be trimmed is capable of being extended according to a position of the recommended position 942.

If the end time indicator 924 is touched, the controller 180 can control a recommended position 944 of the end time indicator 924 to be displayed in accordance with a size of a file attachable to a message. In this case, as mentioned in the foregoing description, the recommended position 944 can be determined in accordance with a position of the start time indicator 922 and the size of the file attachable to the message. If the end time indicator 924 is touched in a state that a size of a file, which is anticipated when a configured section is trimmed, is smaller than the size of the file attachable to the message, as shown in an example of FIG. 9c (b), the recommended positon 944 can be displayed at the right of the end time indicator 924. Although it is not depicted, if the end time indicator 924 is touched in a state that a size of a file, which is anticipated when a configured section is trimmed, is bigger than the size of the file attachable to the message, the recommended position 944 can be displayed at the left of the end time indicator 924.

If editing of a video is completed and a size of a part trimmed from the video is smaller than a size of a file attachable to a message, the controller 180 can control a message transmission screen to be displayed to transmit a message to which the edited video (i.e., the part trimmed via video editing) is attached.

As a different example, the controller 180 can control a message to which an edited video is attached to be transmitted to a different terminal immediately after video editing is completed while omitting a process of displaying the message transmission screen.

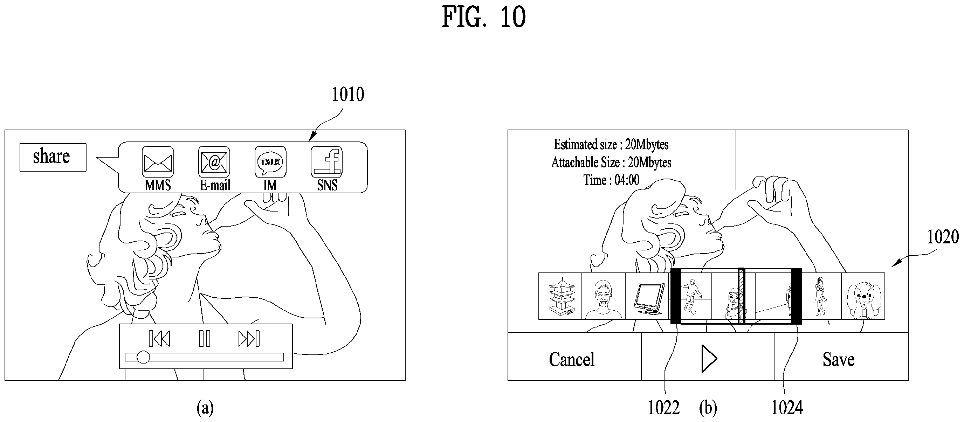

FIG. 10 is a diagram for explaining an operation of a mobile terminal 100 when a video in playing is bigger than an attached file attachable to a message.

As shown in an example of FIG. 10 (a), the controller 180 can control a list 1010 in which messaging services usable for sharing a video in playing are listed to be displayed. If a messaging service is selected from the list shown in FIG. 10 (a) and a size of a video in playing is bigger than a size of an attached file capable of being transmitted by the selected messaging service, the controller 180 can control a video editing function for controlling the size of the video to be executed.

As an example, FIG. 10 (b) is a diagram for an example of executing the video editing function. As mentioned earlier in FIG. 4a, indicators 1022/1024 indicating start time and end time of a section to be trimmed can be displayed on a progress bar 1020.

A user can configure a section to be trimmed by controlling a position of the start time indicator 1022 and a position of the end time indicator 1024. In this case, as mentioned earlier in FIG. 9b, a length between the start time indicator 1022 and the end time indicator 1024 can be restricted by a size of a file attachable to a message.

Moreover, if a size of a video, which is anticipated when a section between the start time and the end time is trimmed, is bigger than the size of the file attachable to the message, as mentioned earlier in FIG. 9b, the controller can control feedback to be outputted to inform a user that the video to be trimmed is unable to be attached to the message.

If editing of a video is completed and a size of a part trimmed from the video is smaller than a size of a file attachable to a message, the controller 180 can control a message transmission screen to be displayed to transmit a message to which the edited video (i.e., the part trimmed via video editing) is attached.

As a different example, the controller 180 can control a message to which an edited video is attached to be transmitted to a different terminal immediately after video editing is completed.

Referring to FIG. 9b and FIG. 10, a user can configure a section to be trimmed by controlling a position of start time and a position of end time. As a different example, the mobile terminal 100 according to the present invention can automatically configure a highlighted part of a video as a section to be trimmed when the video is edited. An example of configuring a highlighted part of a video as a section to be trimmed is explained in detail with reference to drawings in the following.

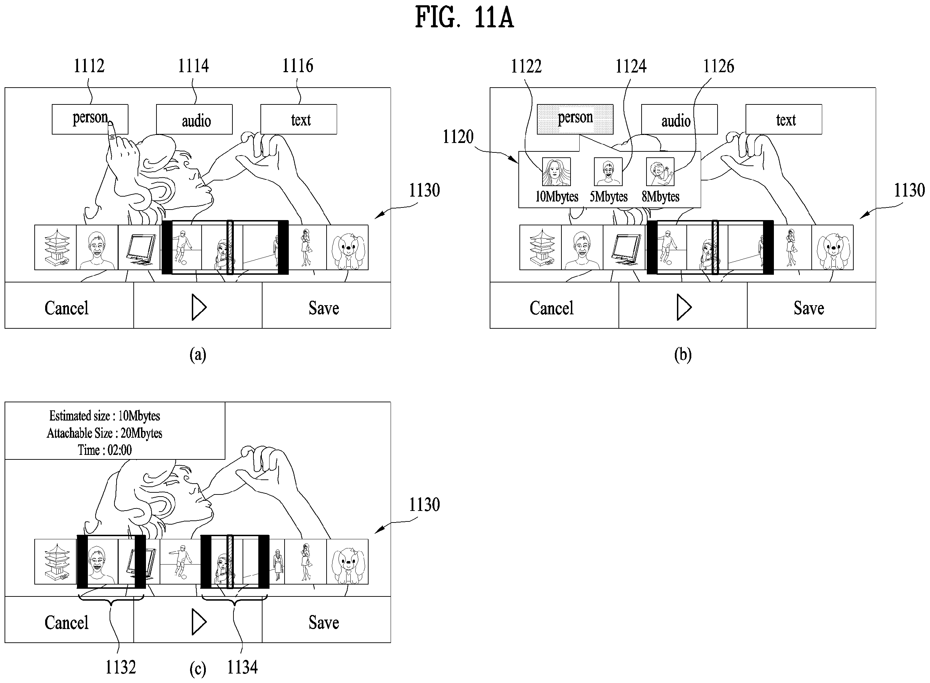

FIGS. 11a to 11c are diagrams for an example that a highlighted part of a video is automatically configured as a section to be trimmed.

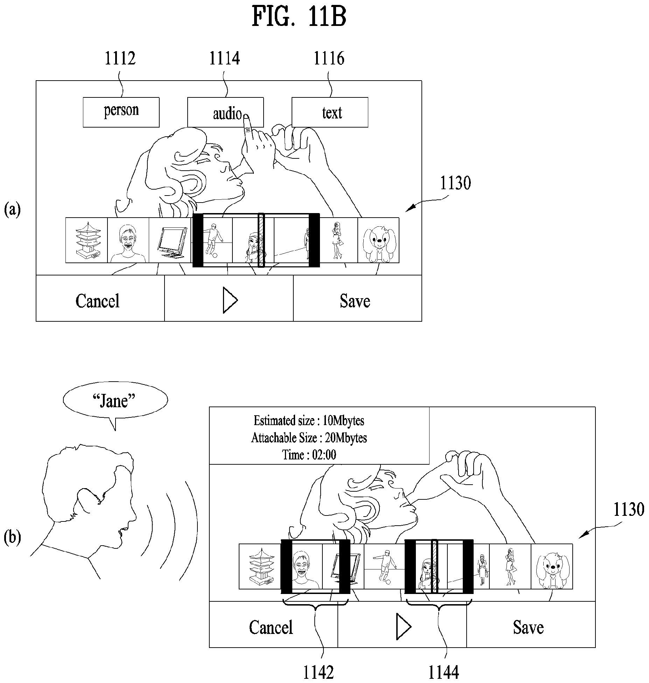

FIG. 11a is a diagram for an example that a section in which a specific person appears is configured as a section to be trimmed. The controller 180 can configure a section in which a specific person appears among a whole playback section as a section to be trimmed. As an example, according to an example shown in FIG. 11a (a), if 'person' item 1112 is selected, as shown in an example of FIG. 11a (b), the controller 180 can control a list 1120 of persons appearing in a video to be displayed. In this case, the controller 180 can control information on a size of a section in which a person appears to be displayed according to each person via the display unit 151. As an example, if persons belonging to the list of persons shown in FIG. 11 (b) are sequentially called as a first person to a third person 1122/1124/1126, it may be able to display information indicating that a size of a section in which the first person 1122 appears corresponds to 10 Mbytes, a size of a section in which the second person 1124 appears corresponds to 5 Mbytes, and a size of a section in which the third person 1126 appears corresponds to 8 Mbytes.

If at least one or more persons are selected from the list of persons appearing in a video, the controller 180 can configure a section in which the selected person appears as a section to be trimmed among a whole playback section of the video. As an example, if the first person 1122 is selected from the list of persons shown in FIG. 11a (b), the controller 180 can control a section in which the first person 1122 appears as a section to be trimmed. If a selected person appears in a plurality of sections, a plurality of the sections can be configured as a section to be trimmed. Referring to an example of FIG. 11a (c), two sections to be trimmed are configured.

If a plurality of persons are selected from the list of persons, the controller 180 can configure all sections in which a plurality of the persons appear as a section to be trimmed.

The controller 180 can configure a section in which a prescribed keyword occurs as a section to be trimmed.

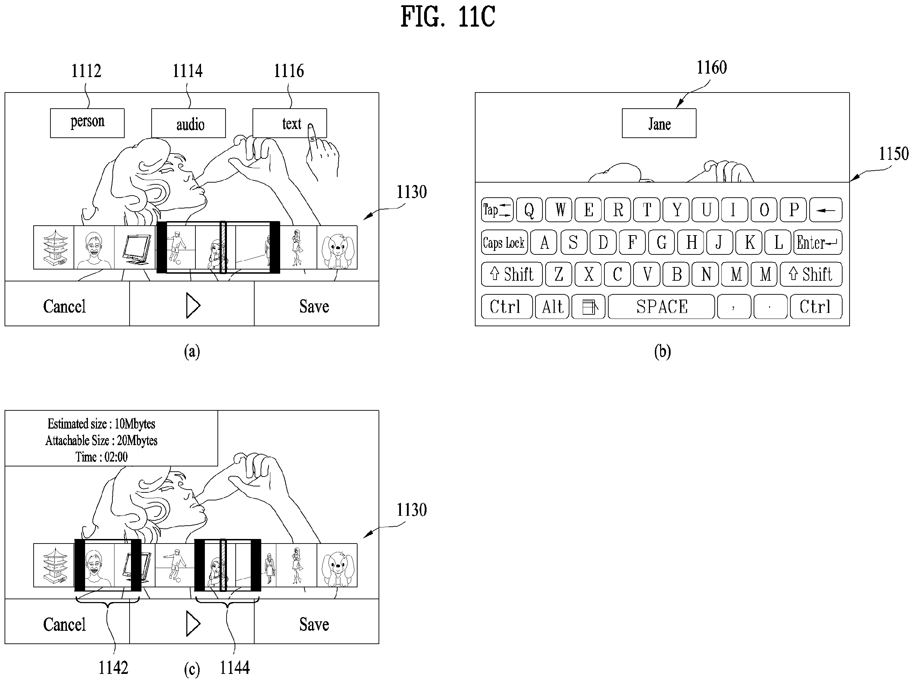

As an example, FIGS. 11b and 11c are diagrams for an example of configuring a section to be trimmed including a section in which a prescribed keyword occurs. Referring to an example of FIG. 11b (a), if 'audio' item 1114 is selected, the controller 180 can activate a microphone. If audio is inputted via the microphone, the controller 180 can configure a section to be trimmed based on a section in which a keyword corresponding to the inputted audio appears. As an example, if a keyword inputted by audio of a user corresponds to 'Jane', the controller 180 converts the audio inputted via the microphone and audio occurring in a video into text (speech to text (STT)) and may be then able to configure a section in which audio identical to the keyword occurs as a section to be trimmed. Referring to an example of FIG. 11b (b), two sections to be trimmed 1142/1144 are configured.

Referring to an example of FIG. 11c (a), if 'text' item 1116 is selected, as shown in an example of FIG. 11c (b), the controller 180 can control a keypad 1150 to be displayed to receive an input of a keyword. If a keyword 1160 inputted via the keypad corresponds to 'Jane', the controller 180 converts audio occurring in a video into a text and may be then able to configure a section in which audio identical to the keyword occurs as a section to be trimmed. Referring to an example of FIG. 11c (b), two sections to be trimmed 1142/1144 are configured.

Referring to an example shown in FIG. 8, if a size of a video is adjusted to a size smaller than a size of a file attachable to a message via video editing, the controller 180 can attach the video of which editing is completed to the message. Yet, if a size of the video of which editing is completed is bigger than the size of the file attachable to the message despite the editing of the video is completed, the controller 180 divides the video of which the editing is completed into a plurality of slice files in accordance with the size of the file attachable to the message and can control one of a plurality of the slice files to be attached to the message. Since dividing a video into a plurality of slice files has been explained in the steps S502, S504 and S505 in FIG. 5, detail explanation is omitted at this time.

Referring to an example of FIG. 8, a video editing function starts only when a size of a video is bigger than a size of a file attachable to a message. Unlike the example, the mobile terminal 100 according to the present invention can be configured to select a messaging service in the middle of editing a video to transmit the video. When a user intends to share a video with each other, the mobile terminal 100 according to the present invention can be applied as well. Regarding this, it shall be explained in detail with reference to drawings in the following.

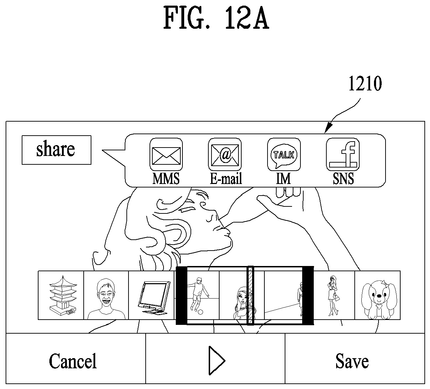

FIGS. 12a to 12c are diagrams for explaining an operation of a mobile terminal 100 when a video in editing is to be shared.

As shown in an example of FIG. 12a, the controller 180 can control a list 1210 in which messaging services usable for sharing a video in editing are listed to be displayed in the middle of editing the video. Referring to an example of FIG. 12a, the list 1210 is displayed in an icon form. If a messaging service is selected from the list 1210, the controller 180 can control a video to be edited in accordance with a size of a file attachable to a message in the selected messaging service.

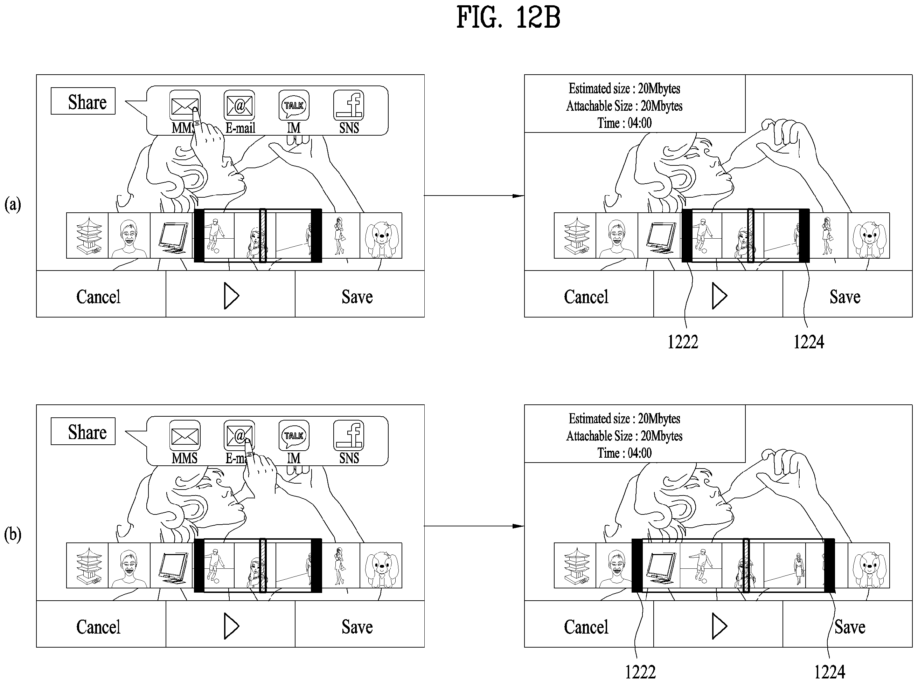

Specifically, the controller 180 can control a length of a section to be trimmed to be restricted in accordance with a size of a file attachable to a message. As an example, FIG. 12b is a diagram for an example that a maximum length of a section to be trimmed varies according to a messaging service. For clarity, assume that a start time indicator 1222 and an end time indicator 1224 are separated from each other with a maximum length and a video in editing has a size of 5 Mbytes per 1 minute-running time.

If a text message of which a size of a file attachable to the text message corresponds to 20 Mbytes is selected, as shown in an example of FIG. 12b (a), the controller 180 can control a length of a section to be trimmed to be restricted to 4 minutes. On the contrary, if e-mail of which a size of a file attachable to the e-mail corresponds to 30 Mbytes is selected, as shown in an example of FIG. 12b (b), the controller 180 can control a length of a section to be trimmed to be restricted to 6 minutes.

As shown in the examples, the controller 180 can determine a maximum length of a section to be trimmed according to a size of an attached file supported by a selected messaging service.

As a different example, if a size of a video, which is anticipated when a section between start time and end time is trimmed, is bigger than a size of a file attachable to a message, the controller 180 can control feedback to be outputted to inform a user that the video to be trimmed is unable to be attached to the message. Since outputting feedback has been mentioned earlier in FIG. 9b, detail explanation on the feedback output is omitted at this time.

If a user input for completing video editing is inputted, the controller 180 trims, stores a configured section and may be then able to control a message writing screen to be displayed to transmit a message to which an edited video (i.e., a trimmed video) is attached.

As a different example, if a user input for completing video editing is inputted, the controller 180 can control transmission of a message to which an edited video (i.e., a trimmed video) is attached to be started without displaying a message writing screen.

It may be able to select a plurality of messaging services intending to share a video in editing. If a plurality of the messaging services are selected, the controller 180 can display a section to be trimmed on a progress bar according to a selected messaging service.

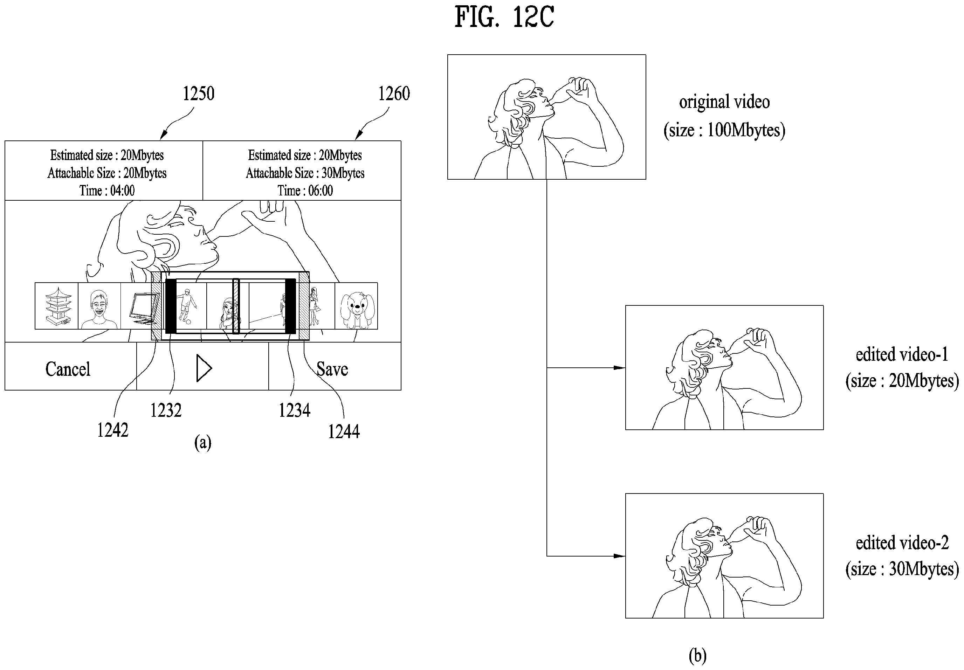

As an example, FIG. 12c is a diagram for an example of selecting a plurality of messaging services. For clarity, assume that messaging services selected by a user correspond to a text message and e-mail and assume that a size of a file attachable to the text message corresponds to 20 Mbytes and a size of a file attachable to the e-mail corresponds to 30 Mbytes.

If the text message and the e-mail are selected, as shown in an example of FIG. 12c (a), the controller 180 can control indicators 1232/1234 for indicating a section to be attached to the text message and indicators 1242/1244 for indicating a section to be attached to the e-mail to be displayed. Specifically, a first start time indicator 1232 and a first end time indicator 1234 may correspond to indicators for configuring a section to be trimmed to attach the section to the text message. And, a second start time indicator 1242 and a second end time indicator 1244 may correspond to indicators for configuring a section to be trimmed to attach the section to the e-mail.

Moreover, the controller 180 can control information 1250/1260 on a file size, which is anticipated when a length of each section and each section are newly stored, to be displayed. As an example, first information 1250 shown in FIG. 12c (a) can include information on a section between the first start time indicator 1232 and the first end time indicator 1234 and information on a size of a file attachable to a text message and second information 1260 can include information on a section between the second start time indicator 1242 and the second end time indicator 1244 and information on a size of a file attachable to e-mail.

Subsequently, the controller 180 can store the section configured to be attached to the text message and the section configured to be attached to the e-mail as files different from each other. As an example, referring to FIG. 12c (b), 2 videos are additionally generated irrespective of an original video. One (edited video-1) of the two videos is generated based on the size of the file attachable to the text message and another one (edited video-2) is generated based on the size of the file attachable to the e-mail.

In the foregoing description, when a video is edited, an example of reducing a size of the video by extracting a partial section from the video and saving the partial section has been explained. As a different example, the controller 180 can reduce a size of a video by lowering resolution of the video.

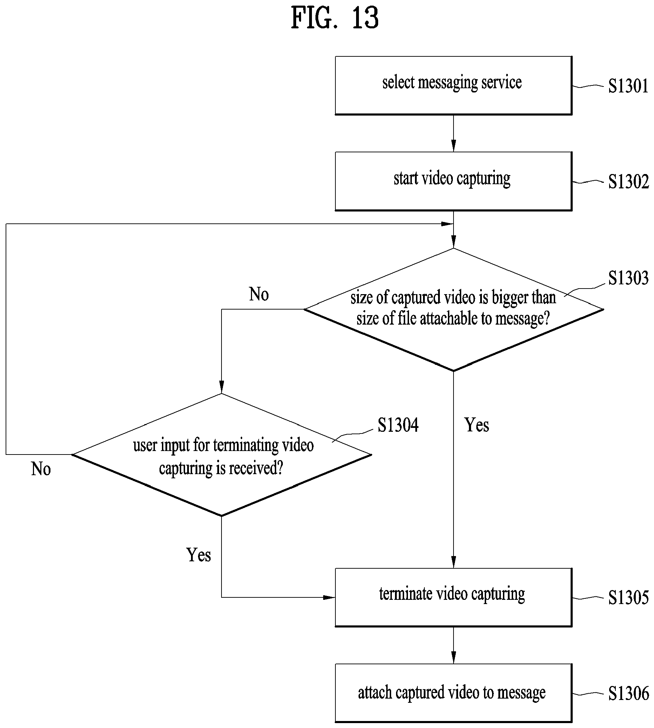

As mentioned earlier in FIG. 6a (c), the mobile terminal 100 according to the present invention can attach a newly captured video to a message. In this case, the mobile terminal 100 according to the present invention can control a size of the newly captured video to be smaller than a size of a file attachable to a message. Regarding this, it shall be described in detail with reference to FIG. 13 in the following.

FIG. 13 is a flowchart for an operation of a mobile terminal 100 according to one embodiment of the present invention. Referring to FIG. 13, first of all, a messaging service for sharing a newly captured video is selected [S1301]. If capturing a video, which is to be attached to a message, starts [S1302], the controller 180 can generate a video file in which images inputted via the camera 121 are recorded.

In this case, if a size of the captured video is smaller than a size of a file attachable to the message [S1303], the controller 180 can consistently capture the video unless a user input for terminating the video capturing is received [S1304]. On the contrary, if the size of the captured video is bigger than the size of the file attachable to the message [S1303] or if the user input for terminating the video capturing is received in a state that the size of the captured video is smaller than the size of the file attachable to the message [S1304], the controller 180 can terminate the video capturing [S1305] and may be able to control the captured video to be attached to the message [S1306].

An example of restricting time of capturing a video in accordance with a size of a file attachable to a message is explained in detail with reference to drawings in the following.

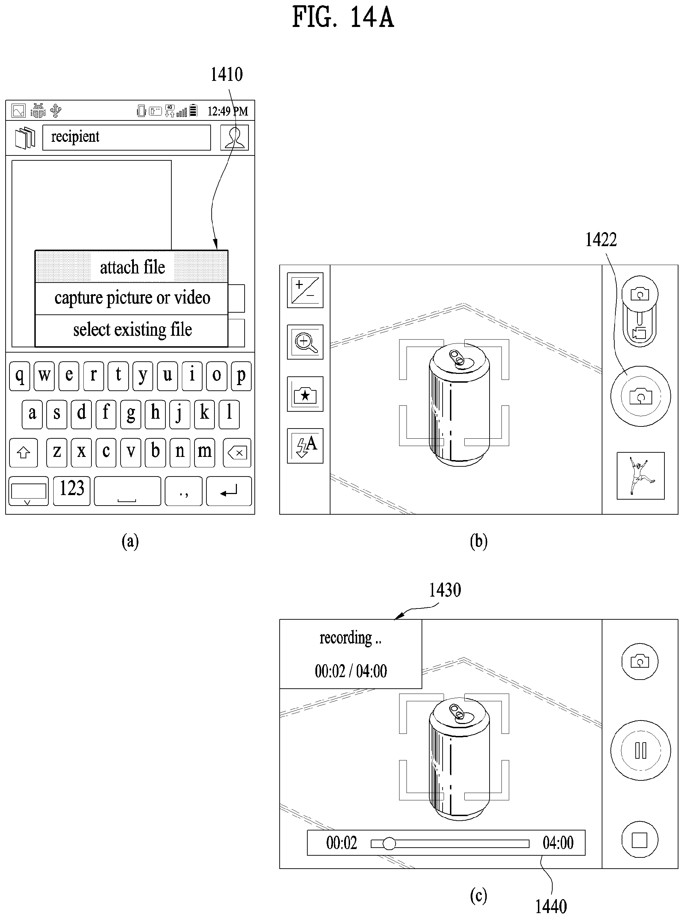

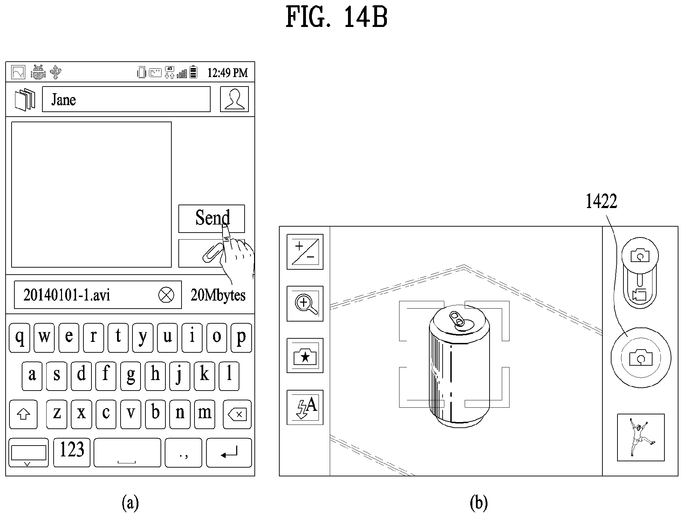

FIGS. 14a and 14b are diagrams for explaining an operation of a mobile terminal 100 when a video bigger than an attached file attachable to a message is attached in a state of executing a messaging service.

If an attached file is touched while a message writing screen is displayed, as shown in an example of FIG. 14a (a), the controller 180 can control a menu 1410 for selecting a file to be attached to a message to be displayed.

If 'capture picture or video' item is touched in the menu 1410 shown in FIG. 14a (a), the controller 180 can control a capturing screen for capturing a video or a picture to be displayed. Specifically, as shown in an example of FIG. 14a (b), the controller 180 can control an image inputted via the camera 121, a menu for adjusting a capturing value and buttons to be displayed. In a state of being configured to capture a video, if a capturing button 1422 is touched, the controller 180 can start video capturing. In this case, the controller 180 may set a limit on time of capturing a video in accordance with a size of a file attachable to a message.

As an example, if a size of a file attachable to a message corresponds to 20 Mbytes and a video of a size of 20 Mbytes is captured for 4 minutes, the controller 180 can control available capturing time to be set to 4 minutes. In addition, the controller 180 can control information on limited capturing time to be outputted.

The information on the limited capturing time can be displayed in a text form or a bar form of which a gauge is increasing as capturing time is getting longer. Referring to an example shown in FIG. 14a (c), text information 1430 indicating that available capturing time corresponds to 4 minutes and information 1440 of a bar form of which a total length corresponds to 4 minutes are displayed at the same time.

If a user input for terminating video capturing is received in a state that capturing time is shorter than available capturing time, the controller 180 terminates video capturing and may be able to store a captured video. In addition, the controller 180 can control a message writing screen to be displayed to transmit a message to which the captured video is attached.

On the contrary, if capturing time approaches to available capturing time, the controller 180 automatically terminates video capturing and can store a captured video. In addition, as shown in an example of FIG. 14b (a), the controller can control a message writing screen to be displayed to transmit a message to which the captured video is attached. If a recipient to which the message is transmitted is designated via the message writing screen and the message is transmitted to the recipient, as shown in an example of FIG. 14b (b), the controller 180 displays an image inputted via the camera 121 and may be able to control a menu for adjusting capturing values and buttons to be displayed to enable a user to capture a video again. In particular, if video capturing is terminated due to not a user input but a limit of available capturing time, it is considered as the user has an intention of continuously capturing a video and additional video capturing can be performed after the message is transmitted. In this case, the controller 180 can configure a person identical to the recipient of the previous message as a recipient of a message to which an additionally captured video is attached.

Referring to an example of FIGS. 14a and 14b, a capturing screen for capturing a video attachable to a message is displayed after a messaging service is executed. On the contrary, the mobile terminal 100 according to the present invention can control a messaging service for transmitting a video to be captured to be selected based on a user input received while a capturing screen is displayed before video capturing is started.

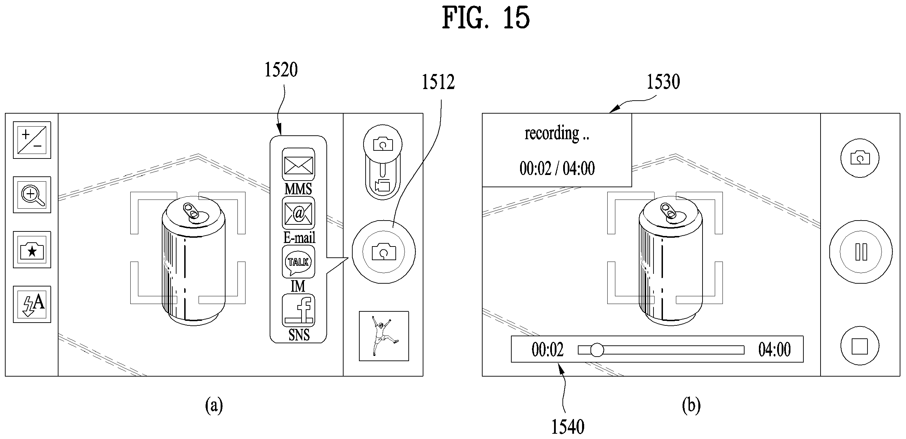

As an example, FIG. 15 is a diagram for an example of selecting a messaging service, which is used for transmitting a video to be captured, from a capturing screen. If a capturing button 1512 for capturing a video is touched, as shown in an example of FIG. 15 (a), the controller 180 can control a list 1520 of messaging services usable for transmitting a captured video to be displayed. If one messaging service is selected from the list 1520 shown in FIG. 15 (a), the controller 180 starts to capture a video and may be able to control a length of available capturing time to be restricted in accordance with a size of a file attachable to the selected messaging service. As an example, if a size of a file attachable to a text message corresponds to 20 Mbytes and a video of a size of 20 Mbytes is captured for 4 minutes, as shown in an example of FIG. 15 (b), the controller 180 can control the available capturing time to be restricted by 4 minutes. As mentioned earlier in FIG. 14a, information 1530/1540 on restricted capturing time can be displayed on the display unit 151.

In this case, a touch input of a user to display the list 1520 of the messaging services is to touch the capturing button 1512 for more than predetermined time (i.e., long touch) and a touch input of the user to select one messaging service from the list 1520 is to drag a pointer to one messaging service of the list 1520 from the capturing button 1512.

If a user input for terminating video capturing is received in a state that capturing time is shorter than available capturing time, the controller 180 terminates video capturing and may be able to store a captured video. In addition, the controller 180 can control a message writing screen to be displayed to transmit a message to which the captured video is attached.

On the contrary, if capturing time approaches to available capturing time, the controller 180 automatically terminates video capturing and may be able to store a captured video. In addition, the controller 180 can control a message writing screen to be displayed to transmit a message to which the captured video is attached. Regarding this, it has been described earlier with reference to FIG. 14b.

Referring to examples mentioned earlier in the aforementioned embodiments, a messaging service for transmitting a video to be captured is selected before video capturing is started. As a different example, the mobile terminal 100 according to the present invention can be configured to select a messaging service for sharing a video in currently captured in the middle of capturing the video.

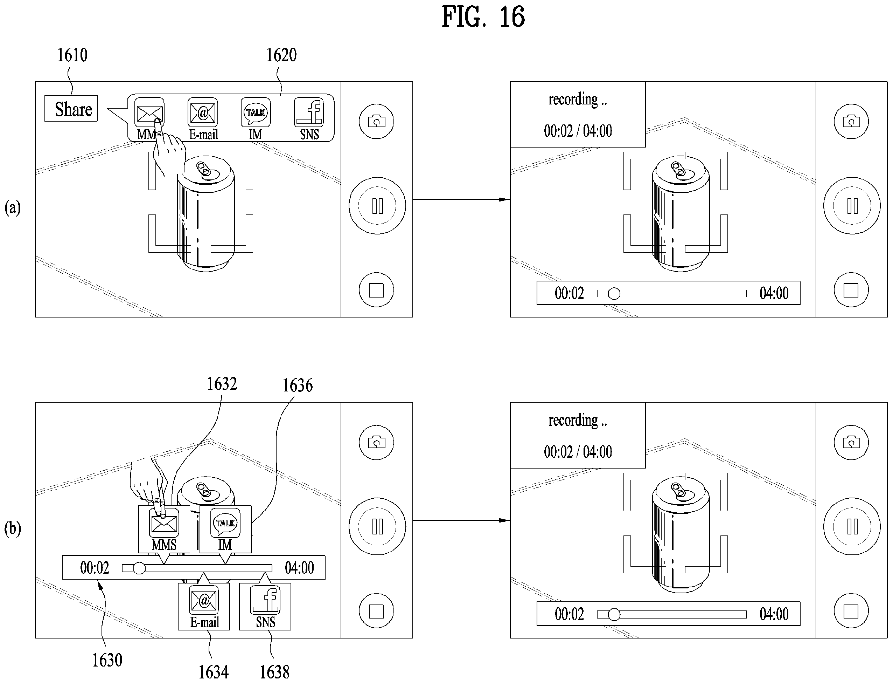

As an example, FIG. 16 is a diagram for an example of selecting a messaging service, which is used for sharing a video with each other, in the middle of capturing the video. If a sharing button for sharing a captured video is touched in the middle of capturing the video, as shown in an example of FIG. 16 (a), the controller 180 can control a list of messaging services for sharing a currently captured video to be displayed. If one of the messaging services is selected, the controller 180 can control available capturing time to be restricted in accordance with a size of a file attachable to the selected messaging service.

As a different example, as shown in an example of FIG. 16 (b), the controller 180 can control icons 1632/1634/1636/1638 of messaging services capable of being selected to share a currently captured video to be displayed in the vicinity of a progress bar 1630 of which a gauge is increasing as an amount of video capturing is getting bigger. In this case, a position in which each of the icons 1632/1634/1636/1638 is displayed can be determined based on a size of a file attachable to a messaging service corresponding to each icon. For instance, a text message icon 1632 to which a file of a size of 20 Mbytes is attachable can be positioned at 04:00 on the progress bar 1630 and an e-mail icon 1634 to which a file of a size of 30 Mbytes is attachable can be positioned at 06:00 on the progress bar 1630.

If one of the icons 1632/1634/1636/1638 shown in FIG. 16 (b) is selected, the controller 180 can control available capturing time to be restricted in accordance with a size of a file attachable to the selected messaging service.

It is apparent that a messaging service for sharing a currently captured video varies in the middle of capturing the video by applying the embodiment shown in FIG. 16. As an example, when video capturing is performed in a state that a prescribed messaging service is selected, if an icon for a different messaging service is selected, the controller 180 can control available capturing time to be changed in accordance with a size of a file attachable to the selected messaging service.

Referring to an example of FIG. 13, if a size of a captured video is bigger than a size of a file attachable to a message, video capturing is automatically terminated. According to the embodiments mentioned in the foregoing description, although a video can be captured in accordance with the size of the file attachable to the message, since there exist a restriction on available capturing time, it is difficult for a user to capture a video as much as the user wants.

In order to solve the aforementioned problem, the mobile terminal 100 according to the present invention continuously captures a video until a user input for terminating the video capturing is received from a user. If a size of a captured video exceeds a size of a file attachable to a message, a video, which is captured after the size of the captured video exceeds the size of the file attachable to the message, can be controlled to be captured as a new video. Regarding this, it shall be described with reference to drawings in the following.

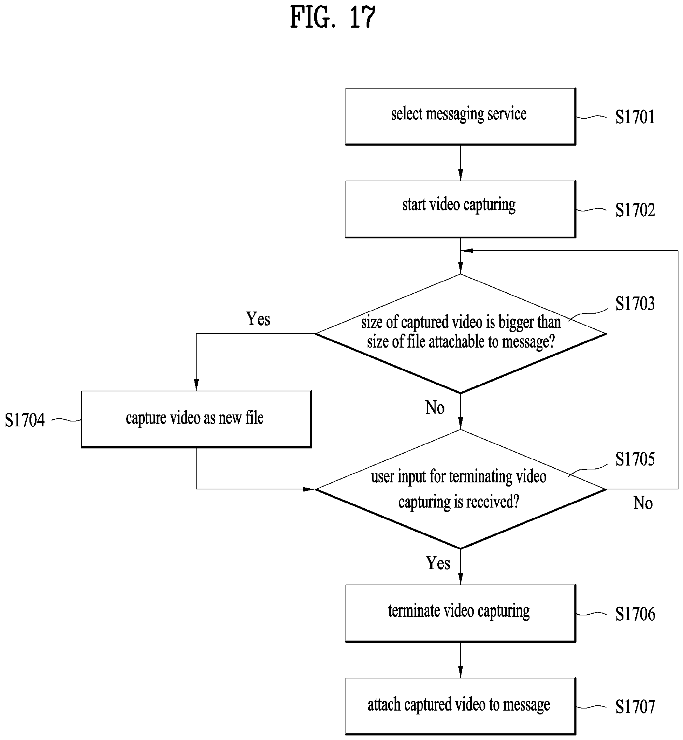

FIG. 17 is a flowchart for an operation of a mobile terminal 100 according to one embodiment of the present invention. Referring to FIG. 17, first of all, if a messaging service for sharing a video to be newly captured is selected [S1701] and capturing a video to be attached to a message is started [S1702], the controller 180 can generate a video file in which images inputted via the camera 121 are recorded.

As time goes by, if video capturing time is getting longer, a size of the video file will gradually increase. If a size of a captured video exceeds a size of a file attachable to a message [S1703], the controller 180 stops recording captured data to the video file and may be able to generate a new video file to record images inputted via the camera 121 in the new video file.

In particular, in order to make a size of a video not exceed a size of a file attachable to a message, if the size of the video exceeds the size of the file attachable to the message, the controller 180 can control a plurality of video files to be generated.

Subsequently, if a user input for terminating video capturing is received [S1705], the controller 180 terminates the video capturing [S1706] and can attach a captured video to a message [S1707]. In this case, if a single video file is generated via the video capturing, the controller 180 can attach the generated video file to the message.

On the contrary, if a plurality of video files are generated via video capturing, the controller 180 can control one of a plurality of the video files to be attached to the message. In this case, the video file attached to the message may correspond to a first video file among a plurality of the video files or a video file selected by a user.

When a video is captured, an example of generating a plurality of video files is explained in detail with reference to drawings in the following.

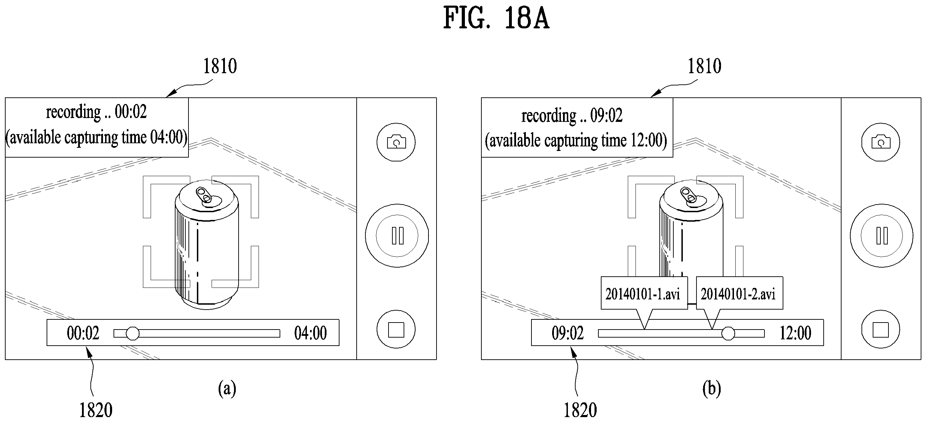

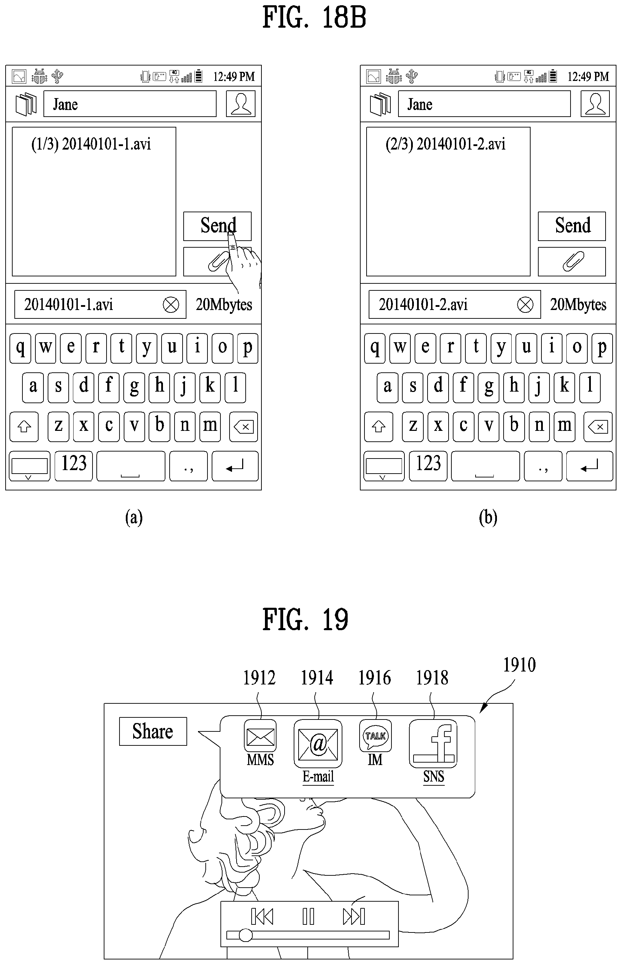

FIGS. 18a and 18b are diagrams for explaining an example of generating a plurality of video files when a video is captured. If a random messaging service for sharing a video to be captured is selected, the controller 180 can determine available capturing time in accordance with a size of a file attachable to the selected messaging service. As an example, if a size of a file attachable to a message corresponds to 20 Mbytes and a video of a size of 20 Mbytes is captured for 4 minutes, the controller 180 can control available capturing time to be restricted to 4 minutes. In addition, as shown in an example of FIG. 18a (a), the controller 180 can control information 1819/1920 on the restricted capturing time to be outputted.

If video capturing is started, the controller 180 generates a video file and may be able to record captured image data in the generated video file.

As time goes by, a size of the video file is getting bigger. If image data is continuously recorded in the video file after a size of a video approaches to a size of a file attachable to a message, the size of the video file exceeds the size of the file attachable to the message and the video file is unable to be attached to the message. Hence, if a size of a captured video approaches to the size of the file attachable to the message, the controller 180 stops recording image data in a previously generated video file and may be able to control the image data to be recorded in a new video file.

As an example, when a video is captured for 4 minutes, if a size of the video approaches to a size of a file attachable to a message, the controller 180 records image data between 0 to 4 minutes in a first video file and may be able to record image data between 4 to 8 minutes in a second video file.

If a new video file is generated, the controller 180 can control information on available capturing time to be updated as well. As an example, if a second video file is generated, available capturing time and size can be increased as much as double. Moreover, the controller 180 can control information on a completed video file to be displayed as well. In this case, the information on the completed video file can include at least one of a name of a video file and a thumbnail representing a video.

As an example, FIG. 18a (b) is a diagram for an example of recording an image data in a third video file. Available capturing time is changed to 12:00, which is longer as much as three times than 04:00 of FIG. 18a (a). Information (file name) on a first video file (19140101-1) and a second video file (19140101-2) is displayed on a progress bar 1440.

If a plurality of video files are generated via video capturing, the controller 180 can control one of a plurality of the video files to be attached to a message. In addition, the controller 180 can control the total number of video files and information on an order of the video file attached to the message to be automatically recorded in a message input area. As an example, '(1/3)' recorded in the message input area shown in FIG. 18b (a) may indicate that a first video file among the total 3 video files is attached to the message.

If the message to which one of a plurality of the video files is attached is transmitted, the controller 180 can control a message writing screen to be automatically displayed to transmit a message to which a video file of a next order is attached. As an example, referring to an example shown in FIG. 18b (a), if a transmission button is touched and a message to which a first video file is attached is transmitted, as shown in an example of FIG. 18b (b), the controller 180 can control a message writing screen to be immediately displayed to transmit a message to which a second slice file is attached. In this case, the controller 180 can configure a person identical to a recipient of the first message as a recipient of a message to which a second video file is attached.

According to the examples shown in embodiments of FIGS. 5, 8, 13 and 17, a size of a video and a size of a file attachable to a message are compared with each other. In this case, it is not mandatory to compare the size of the video with the size of the file attachable to the message. The aforementioned embodiments can be implemented in a manner of comparing the size of the video and a size of a predetermined file with each other. In this case, the size of the predetermined file can be manually determined by a user input or can be determined in a manner of deducting a margin value from the size of the file attachable to the message.

The mobile terminal 100 according to the present invention may be able to recommend a messaging service suitable for a size of a video or an anticipated size of an edited video.

As an example, FIG. 19 is a diagram for an example of recommending a messaging service suitable for a size of a video. The controller 180 can recommend a messaging service to which a size of a video or a size bigger than an anticipated size of an edited video is attachable. Specifically, the controller 180 can control messaging services to which a size of a video or a size bigger than an anticipated size of an edited video is attachable to be exposed to a list of messaging services only. The controller 180 can highlight the messaging services exposed to the list of the messaging services.

As an example, if a size of a video or an anticipated size of an edited video corresponds to 30 Mbytes, a size of a file attachable to a text message corresponds to 20 Mbytes, a size of a file attachable to an e-mail corresponds to 30 Mbytes, a size of a file attachable to an instant message corresponds to 25 Mbytes and a size of a file attachable to SNS corresponds to 40 Mbytes, as shown in an example of FIG. 19, the controller 180 displays bigger icons 1914/2018 respectively corresponding to the e-mail and the SNS capable of attaching a file bigger than 30 Mbytes on a list 1910 of messaging services compared to other icons 1912/2016 to induce a user to use the e-mail and the SNS.

According to one embodiment of the present invention, the aforementioned method (operation flowchart) can be implemented by codes readable by a processor in a medium in which a program is recorded. Examples of the medium readable by the processor include a ROM, a RAM, a CD-ROM, a magnetic tape, a floppy disk, an optical data storing device and the like. The method can also be implemented in a carrier wave (e.g., transmission via the internet) form.

The mobile terminal 100 may be non-limited by a composition and method of the aforementioned embodiments. Instead, all or a part of each of the embodiments can be configured in a manner of being selectively combined with each other to enable the embodiments to be variously modified.

### INDUSTRIAL APPLICABILITY

The present invention can be applied not only to a mobile terminal capable of being directly carried by a user but also to a fixed terminal.

## Claims

1. A mobile terminal (100), comprising:
a display unit (151) configured to display information;
a wireless communication unit (100) configured to perform wireless communication;
a memory (160) configured to store a video; and
a controller (180) configured to:
select (S801) a messaging service,
select a video to be transmitted via the selected messaging service;
if (S802) a size of the selected video is bigger than a threshold size of an attachable file supported by the selected messaging service, control (S804) an editing screen to be displayed to extract a partial section from a whole playback section of the video to be trimmed;
if a size of the partial section is bigger than the threshold size, control a feedback to be outputted to indicate the partial section is not attachable;
if the size of the partial section is smaller than the threshold size, trim the partial section from the whole playback section of the video; and
attach (S807) the trimmed partial section to a message of the selected messaging service.

2. The mobile terminal of claim 1, wherein the editing screen comprises a progress bar corresponding to the whole playback section of the video, a start time indicator (922) indicates a start point of the partial section and an end time indicator (924) indicates an end point of the partial section.

3. The mobile terminal of claim 2, wherein a maximum distance between the start time indicator (922) and the end time indicator (924) is limited under the threshold size.

4. The mobile terminal of claim 2, wherein the length between the start time indicator (922) and the end time indicator (924) is restricted to a size of a file attachable to the message.

5. The mobile terminal of claim 1, wherein the controller (180) is further configured to control the display unit (151) to display information on the size of the partial section and information on the size of the file attachable to the message.

6. The mobile terminal of claim 5, wherein the feedback is presented by highlighting the information on the size; or by outputting a warning sound; or outputting a vibration; or flickering a LED.

7. The mobile terminal of claim 1, wherein the length of the partial section to be trimmed is varied by a touch input of a user.

8. The mobile terminal of claim 7, wherein if a start time indicator (922) of the partial section to be trimmed is touched by the user, the controller (180) is further configured to control a recommended position (942) of the start time indicator (922) to be displayed in accordance with a size of the file attachable to the message, preferably according to a position of the end time indicator (924) and the size of a file attachable to the message.

9. The mobile terminal of claim 7 or 8, wherein if an end time indicator (924) of the partial section to be trimmed is touched by the user, the controller (180) is configured to control a recommended position of the end time indicator (924) to be displayed in accordance with a size of the file attachable to the message, preferably according to a position of the start time indicator (922) and the size of a file attachable to the message.

10. A method of controlling a mobile terminal (100), comprising:
selecting (S801) a messaging service;
selecting a video to be transmitted via the selected message service;
if (S802) a size of the selected video is bigger than a threshold size of an attachable file supported by the selected messaging service, displaying (S804) an editing screen to extract a partial section from a whole playback section of the video to be trimmed;
if a size of the partial section is bigger than the threshold size, outputting a feedback to indicate the partial section is not attachable;
if the size of the partial section is smaller than the threshold size, trimming the partial section from the whole playback section of the video based on the threshold size; and
attaching (S807) the trimmed partial section to a message of the selected messaging service.

## Patentansprüche

1. Mobiles Endgerät (100), das Folgendes umfasst:
eine Anzeigeeinheit (151), die konfiguriert ist, Informationen anzuzeigen;
eine drahtlose Kommunikationseinheit (100), die konfiguriert ist, eine drahtlose Kommunikation auszuführen;
einen Speicher (160), der konfiguriert ist, ein Video zu speichern; und
eine Steuereinheit (180), die konfiguriert ist zum:
Auswählen (S801) eines Nachrichtendienstes,
Auswählen eines Videos, das über den ausgewählten Nachrichtendienst zu senden ist;
dann (S802), wenn eine Größe des ausgewählten Videos größer als eine Schwellengröße einer anfügbaren Datei ist, die durch den ausgewählten Nachrichtendienst unterstützt wird, Steuern (S804), dass ein Editierbildschirm angezeigt wird, um einen Teilabschnitt aus einem vollständigen Wiedergabeabschnitt des zu kürzenden Videos zu extrahieren;
dann, wenn eine Größe des Teilabschnitts größer als eine Schwellengröße ist, Steuern, dass eine Rückmeldung ausgegeben wird, um anzugeben, dass der Teilabschnitt nicht anfügbar ist;
dann, wenn die Größe des Teilabschnitts kleiner als die Schwellengröße ist, Kürzen des Teilabschnitts von dem vollständigen Wiedergabeabschnitt des Videos; und
Anfügen (S807) des gekürzten Teilabschnitts an eine Nachricht des ausgewählten Nachrichtendienstes.

2. Mobiles Endgerät nach Anspruch 1, wobei der Editierbildschirm einen Fortschrittsbalken umfasst, der dem gesamten Wiedergabeabschnitt des Videos entspricht, ein Startzeitindikator (922) einen Startpunkt des Teilabschnitts angibt und ein Endzeitindikator (924) einen Endpunkt des Teilabschnitts angibt.

3. Mobiles Endgerät nach Anspruch 2, wobei ein maximaler Abstand zwischen dem Startzeitindikator (922) und dem Endzeitindikator (924) auf einen Wert unter der Schwellengröße begrenzt ist.

4. Mobiles Endgerät nach Anspruch 2, wobei die Länge zwischen dem Startzeitindikator (922) und dem Endzeitindikator (924) auf eine Größe einer an die Nachricht anfügbaren Datei beschränkt ist.

5. Mobiles Endgerät nach Anspruch 1, wobei die Steuereinheit (180) ferner konfiguriert ist, die Anzeigeeinheit (151) zu steuern, Informationen über die Größe des Teilabschnitts und Informationen über die Größe der an die Nachricht anfügbaren Datei anzuzeigen.

6. Mobiles Endgerät nach Anspruch 5, wobei die Rückmeldung durch Hervorheben der Informationen über die Größe; oder durch Ausgeben eines Warntons; oder durch Ausgeben einer Vibration; oder durch Flackern einer LED dargestellt wird.

7. Mobiles Endgerät nach Anspruch 1, wobei die Länge des zu kürzenden Teilabschnitts durch eine Berührungseingabe eines Anwenders variiert wird.

8. Mobiles Endgerät nach Anspruch 7, wobei dann, wenn ein Startzeitindikator (922) des zu kürzenden Teilabschnitts durch den Anwender berührt wird, die Steuereinheit (180) ferner konfiguriert ist, zu steuern, dass eine empfohlene Position (942) des Startzeitindikators (922) in Übereinstimmung mit einer Größe der an die Nachricht anfügbaren Datei vorzugsweise gemäß einer Position des Endzeitindikators (924) und der Größe einer an die Nachricht anfügbaren Datei angezeigt wird.

9. Mobiles Endgerät nach Anspruch 7 oder 8, wobei dann, wenn ein Endzeitindikator (924) des zu kürzenden Teilabschnitts durch den Anwender berührt wird, die Steuereinheit (180) konfiguriert ist, zu steuern, dass eine empfohlene Position des Endzeitindikators (924) in Übereinstimmung mit einer Größe der an die Nachricht anfügbaren Datei vorzugsweise gemäß einer Position des Startzeitindikators (922) und der Größe einer an die Nachricht anfügbaren Datei angezeigt wird.

10. Verfahren zum Steuern eines mobilen Endgeräts (100), das Folgendes umfasst:
Auswählen (S801) eines Nachrichtendienstes;
Auswählen eines über den ausgewählten Nachrichtendienst zu sendenden Videos;
dann (S802), wenn eine Größe des ausgewählten Videos größer als eine Schwellengröße einer anfügbaren Datei ist, die durch den ausgewählten Nachrichtendienst unterstützt wird, Anzeigen (S804) eines Editierbildschirms, um einen Teilabschnitt aus einem vollständigen Wiedergabeabschnitt des zu kürzenden Videos zu extrahieren;
dann, wenn eine Größe des Teilabschnitts größer als die Schwellengröße ist, Ausgeben einer Rückmeldung, um anzugeben, dass der Teilabschnitt nicht anfügbar ist;
dann, wenn die Größe des Teilabschnitts kleiner als die Schwellengröße ist, Kürzen des Teilabschnitts von dem vollständigen Wiedergabeabschnitt des Videos anhand der Schwellengröße; und
Anfügen (S807) des gekürzten Teilabschnitts an eine Nachricht des ausgewählten Nachrichtendienstes.

## Revendications

1. Terminal mobile (100), comprenant :
une unité d'affichage (151) configurée pour l'affichage d'informations ;
une unité de communication sans fil (100) configurée pour l'exécution d'une communication sans fil :
une mémoire (160) configurée pour la mémorisation d'une vidéo ; et
un organe de commande (180) configuré pour :
la sélection (S801) d'un service de messagerie,
la sélection d'une vidéo à transmettre par l'intermédiaire du service de messagerie sélectionné ;
si (S802) une taille de la vidéo sélectionnée est supérieure à une taille de seuil d'un fichier attachable pris en charge par le service de messagerie sélectionné, la commande (S804) de l'affichage d'un écran de modification pour l'extraction d'une section partielle d'une section de lecture complète de la vidéo à rogner ;
si une taille de la section partielle est supérieure à la taille de seuil, la commande de la délivrance d'une rétroaction pour indiquer que la section partielle n'est pas attachable ;
si la taille de la section partielle est inférieure à la taille de seuil, le rognage de la section partielle de la section de lecture complète de la vidéo ; et
l'attachement (S807) de la section partielle rognée à un message du service de messagerie sélectionné.

2. Terminal mobile selon la revendication 1, dans lequel l'écran de modification comprend une barre de progression correspondant à la section de lecture complète de la vidéo, un indicateur de temps de début (922) indique un point de début de la section partielle et un indicateur de temps de fin (924) indique un point de fin de la section partielle.

3. Terminal mobile selon la revendication 2, dans lequel une distance maximale entre l'indicateur de temps de début (922) et l'indicateur de temps de fin (924) est limitée au-dessous de la taille de seuil.

4. Terminal mobile selon la revendication 2, dans lequel la longueur entre l'indicateur de temps de début (922) et l'indicateur de temps de fin (924) est restreinte à une taille d'un fichier attachable au message.

5. Terminal mobile selon la revendication 1, dans lequel l'organe de commande (180) est en outre configuré pour la commande à l'unité d'affichage (151) d'afficher des informations sur la taille de la section partielle et des informations sur la taille du fichier attachable au message.

6. Terminal mobile selon la revendication 5, dans lequel la rétroaction est présentée par la mise en surbrillance des informations sur la taille ; ou par la délivrance d'un sens d'avertissement ; ou la délivrance d'une vibration ; ou le scintillement d'une DEL.

7. Terminal mobile selon la revendication 1, dans lequel la longueur de la section partielle à rogner est variée par une entrée de toucher d'un utilisateur.

8. Terminal mobile selon la revendication 7, dans lequel, si un indicateur de temps de début (922) de la section partielle à rogner est touché par l'utilisateur, l'organe de commande (180) est en outre configuré pour la commande de l'affichage d'une position recommandée (942) de l'indicateur de temps de début (922) en fonction d'une taille du fichier attachable au message, de préférence en fonction d'une position de l'indicateur de temps de fin (924) et de la taille d'un fichier attachable au message.

9. Terminal mobile selon la revendication 7 ou 8, dans lequel, si un indicateur de temps de fin (924) de la section partielle à rogner est touché par l'utilisateur, l'organe de commande (180) est configuré pour la commande de l'affichage d'une position recommandée de l'indicateur de temps de fin (924) en fonction d'une taille du fichier attachable au message, de préférence en fonction d'une position de l'indicateur de temps de début (922) et de la taille d'un fichier attachable au message.

10. Procédé de commande d'un terminal mobile (100), comprenant :
la sélection (S801) d'un service de messagerie ;
la sélection d'une vidéo à transmettre par l'intermédiaire du service de messagerie sélectionné ;
si (S802) une taille de la vidéo sélectionnée est supérieure à une taille de seuil d'un fichier attachable pris en charge par le service de messagerie sélectionné, l'affichage (S804) d'un écran de modification pour l'extraction d'une section partielle d'une section de lecture complète de la vidéo à rogner ;
si une taille de la section partielle est supérieure à la taille de seuil, la délivrance d'une rétroaction pour indiquer que la section partielle n'est pas attachable ;
si la taille de la section partielle est inférieure à la taille de seuil, le rognage de la section partielle de la section de lecture complète de la vidéo sur la base de la taille de seuil ; et
l'attachement (S807) de la section partielle rognée à un message du service de messagerie sélectionné.
